# EUROPEAN PATENT APPLICATION

(11) **EP 4 645 120 A1**
(43) Date of publication of application: **05.11.2025**
(21) Application number: 24832324.8
(22) Date of filing: 11.06.2024
(51) Int. Cl.: G06F 16/9535, G06F 16/532, G06F 16/538, G06F 16/56, G06F 16/583, G06F 40/279, G06T 11/00, G06T 7/10, G06V 10/40, G06N 3/0475

(54) **METHOD AND ELECTRONIC DEVICE FOR PROVIDING PERSONALIZED IMAGE**

(30) Priority: 28.06.2023 KR 20230083775; 11.10.2023 KR 20230135448
(71) Applicant: Samsung Electronics Co., Ltd., Suwon-si, Gyeonggi-do 16677 (KR)
(72) Inventor: KIM, Jeongseop, Suwon-si, Gyeonggi-do 16677 (KR); CHOI, Sunghyun, Suwon-si, Gyeonggi-do 16677 (KR)
(74) Representative: Gulde & Partner
(86) International application number: PCT/KR2024/007983
(87) International publication number: WO 2025/005544

(57) **Abstract**

Provided is a method by which an electronic device generates a personalized image. The method may include obtaining a prompt for image generation, extracting a keyword from the prompt, searching for one or more reference images corresponding to the keyword from among a plurality of images stored in the electronic device, segmenting a region related to the keyword within each reference image of the one or more reference images, obtaining image feature information based on the region related to the keyword, transmitting the prompt and the image feature information to a server, and receiving, from the server, a personalized image generated by providing the prompt and the image feature information as an input to a generative model.

## Description

### Technical Field

The disclosure relates to a method, electronic device, server, and system for generating a personalized image and providing the personalized image to a user.

### Background Art

Generative artificial intelligence (Al) may refer to a technology for learning about a structure and a pattern of large-scale data and generating new synthetic data based on input data. In some implementations, generative Al may be used to generate human-level results from various tasks related to text, images, voice, video, music, etc. For example, an image generative model may be used to generate a new image based on a given text, or may be used to generate a new image based on a given image.

However, even when an image generative model may generate an image containing content matching an input based on given text or a given image, it may be difficult to obtain a result specialized for a particular user.

### Disclosure

### Technical Solution

According to an aspect of the disclosure, a method by which an electronic device provides a personalized image may be provided. The method may include obtaining a prompt for image generation. The method may include extracting a keyword from the prompt. The method may include searching for one or more reference images corresponding to the keyword from among a plurality of images stored in the electronic device. The method may include segmenting a region related to the keyword within each of the one or more reference images. The method may include obtaining image feature information based on the region related to the keyword of the reference image. The method may include transmitting the prompt and the image feature information to a server. The method may include receiving, from the server, a personalized image generated by using a generative model that receives the prompt and the image feature information as an input.

According to an aspect of the disclosure, an electronic device for generating a personalized image is provided. The electronic device may include a communication interface, a memory in which one or more instructions are stored, and one or more processors configured to execute the one or more instructions stored in the memory. The one or more processors may be configured to execute the one or more instructions to obtain a prompt for image generation. The one or more processors may be configured to execute the one or more instructions to extract a keyword from the prompt. The one or more processors may be configured to execute the one or more instructions to search for one or more reference images corresponding to the keyword from among a plurality of images stored in the electronic device. The one or more processors may be configured to execute the one or more instructions to segment a region related to the keyword within each of the one or more reference images. The one or more processors may be configured to execute the one or more instructions to obtain image feature information based on the region related to the keyword of the reference image. The one or more processors may be configured to execute the one or more instructions to transmit the prompt to the image feature information to a server, through the communication interface. The one or more processors may be configured to execute the one or more instructions to receive, from the server, a personalized image generated by using a generative model that receives the prompt and the image feature information as an input, through the communication interface.

According to an aspect of the disclosure, a method by which a server provides a personalized image may be provided. The method may include obtaining a prompt for image generation. The method may include extracting a keyword from the prompt. The method may include searching for one or more reference images corresponding to the keyword from among a plurality of images stored in an electronic device. The method may include segmenting a region related to the keyword within each of the one or more reference images. The method may include obtaining image feature information based on the region related to the keyword of the reference image. The method may include generating a personalized image by using a generative model. The generative model may be an artificial intelligence model configured to receive the prompt and the image feature information as an input and output the personalized image.

According to an aspect of the disclosure, a server for providing a personalized image may be provided. The server may include a communication interface, a memory in which one or more instructions are stored, and one or more processors configured to execute the one or more instructions. The one or more processors may be configured to execute the one or more instructions to obtain a prompt for image generation. The one or more processors may be configured to execute the one or more instructions to extract a keyword from the prompt. The one or more processors may be configured to execute the one or more instructions to search for one or more reference images corresponding to the keyword from among a plurality of images stored in an electronic device. The one or more processors may be configured to execute the one or more instructions to segment a region related to the keyword within each of the one or more reference images. The one or more processors may be configured to execute the one or more instructions to obtain image feature information based on the region related to the keyword of the reference image. The one or more processors may be configured to execute the one or more instructions to generate a personalized image by using a generative model. The generative model may be an artificial intelligence model configured to receive the prompt and the image feature information as an input and output the personalized image.

According to an aspect of the disclosure, there may be provided a computer-readable recording medium having recorded thereon a program for executing any one of methods described above and below by which an electronic device and/or a server provides a personalized image.

### Description of Drawings

FIG. 1 is a diagram schematically illustrating an electronic device providing a personalized image, according to an embodiment of the disclosure.
FIG. 2 is a flowchart for describing an operation in which an electronic device generates a personalized image, according to an embodiment of the disclosure.
FIG. 3 is a diagram illustrating operations of an electronic device and a server, according to an embodiment of the disclosure.
FIG. 4 is a diagram for describing an operation in which an electronic device extracts a keyword, according to an embodiment of the disclosure.
FIG. 5A is a diagram for describing an operation in which an electronic device searches for an image, according to an embodiment of the disclosure.
FIG. 5B is a diagram for describing an operation in which an electronic device searches for an image, according to an embodiment of the disclosure.
FIG. 6 is a diagram for describing an operation in which an electronic device segments an image, according to an embodiment of the disclosure.
FIG. 7 is a diagram for describing an operation in which an electronic device generates a vector representation, according to an embodiment of the disclosure.
FIG. 8 is a diagram for describing an operation in which a server generates a personalized image, according to an embodiment of the disclosure.
FIG. 9 is a diagram for describing an example in which an electronic device provides a personalized image, according to an embodiment of the disclosure.
FIG. 10A is a flowchart illustrating operations of an electronic device and a server, according to an embodiment of the disclosure.
FIG. 10B is a flowchart illustrating additional operations of an electronic device and a server, according to an embodiment of the disclosure.
FIG. 11 is a diagram for describing an operation in which an electronic device provides image feature information to a user, according to an embodiment of the disclosure.
FIG. 12 is a diagram for describing an operation in which an electronic device generates or processes a prompt, according to an embodiment of the disclosure.
FIG. 13 is a diagram for describing an operation in which an electronic device provides a personalized image, according to an embodiment of the disclosure.
FIG. 14A is a diagram for describing an operation in which an electronic device provides a personalized image, according to an embodiment of the disclosure.
FIG. 14B is a diagram for describing an operation in which an electronic device provides a personalized image, according to an embodiment of the disclosure.
FIG. 14C is a diagram for describing an operation in which an electronic device provides a personalized image, according to an embodiment of the disclosure.
FIG. 14D is a diagram for describing an operation in which an electronic device provides a personalized image, according to an embodiment of the disclosure.
FIG. 15 is a diagram for describing an operation in which an electronic device provides a personalized image, according to an embodiment of the disclosure.
FIG. 16 is a diagram for describing an operation in which an electronic device provides information related to a personalized image, according to an embodiment of the disclosure.
FIG. 17 is a diagram for describing an operation in which an electronic device provides a personalized image, according to an embodiment of the disclosure.
FIG. 18A is a block diagram illustrating a configuration of an electronic device, according to an embodiment of the disclosure.
FIG. 18B is a block diagram illustrating a configuration of an electronic device, according to an embodiment of the disclosure.
FIG. 19A is a block diagram illustrating a configuration of a server, according to an embodiment of the disclosure.
FIG. 19B is a block diagram illustrating a configuration of a server, according to an embodiment of the disclosure.

### Mode for Invention

The terms used herein will be briefly described, and the disclosure will be described in detail. Throughout the disclosure, the expression "at least one of a, b or c" indicates only a, only b, only c, both a and b, both a and c, both b and c, all of a, b, and c, or variations thereof.

All terms including descriptive or technical terms which are used herein should be construed as having meanings that are obvious to one of ordinary skill in the art. However, the terms may have different meanings according to the intention of one of ordinary skill in the art, judicial precedent, or the appearance of new technologies. Also, some of the terms used herein may be arbitrarily chosen by the present applicant, and in this case, these terms are defined in detail below. Accordingly, the specific terms used herein should be defined based on the unique meanings thereof and the entire context of the disclosure.

As used herein, singular expressions are intended to include plural forms of the expressions as well, unless the context clearly indicates otherwise. Terms used herein, including technical or scientific terms, may have the same meaning as commonly understood by one of ordinary skill in the art described in the disclosure. It will be understood that, although the terms "first", "second", etc. may be used herein to describe various elements, these elements should not be limited by these terms. These terms are used only to distinguish one element from another.

It will be understood that when a certain part "includes" a certain component, the part does not exclude another component but may further include another component, unless the context clearly dictates otherwise. Also, the term used in the embodiments such as "... unit" or "... module" indicates a unit for processing at least one function or operation, and may be implemented in hardware, software, or in a combination of hardware and software.

The disclosure relates to a method of generating a personalized image by reflecting an image owned by the user (e.g., an image stored in the user's device such as a smartphone), when an image is generated according to the user's request using a generative model. In embodiments, a second image which is generated by reflecting a first image may refer to a second image which is generated with respect to, in consideration of, or based on the first image. According to an embodiment of the disclosure, a synthetic image may be obtained by reflecting an image, which is not used to train a generative model, during inference (e.g., image generation) performed by the generative model.

In the disclosure, the term "personalized image" may refer to synthetic data (e.g., a synthetic image) generated using a generative model according to a user's image generation request. Also, in the disclosure, the term "personalized image" may refer to an image generated using a generative model by reflecting an image owned by a user. For example, a personalized image may be generated to include a user's personalization feature (e.g., a specific object or an image style). A personalized image may be referred to as a "custom image".

In the disclosure, the term "generative artificial intelligence (Al)" may refer to an artificial intelligence technology capable of generating new text or images in response to input data (e.g., text or images). The term "generative model" may refer to a neural network model for implementing generative Al technology. A generative model may be trained about a pattern and a structure of training data to generate new data having a feature similar to input data or new data corresponding to input data. For example, a generative model may generate an image by using an image-to-image method or a text-to-image method.

In the disclosure, the term "reference image" may refer to data to be referenced in a process of generating a personalized image. The reference image may include elements that may represent a user's characteristics (e.g., the user or people around the user, objects owned by the user, a space around the user, etc.).

The disclosure will be described more fully below with reference to the accompanying drawings for one of ordinary skill in the art to be able to perform the disclosure without any difficulty. However, the disclosure may be implemented in various different forms and is not limited to the embodiments described herein. Also, in the drawings, parts irrelevant to the description are omitted in order to clearly describe the disclosure, and like reference numerals designate like elements throughout the specification.

The disclosure will now be described with reference to the accompanying drawings.

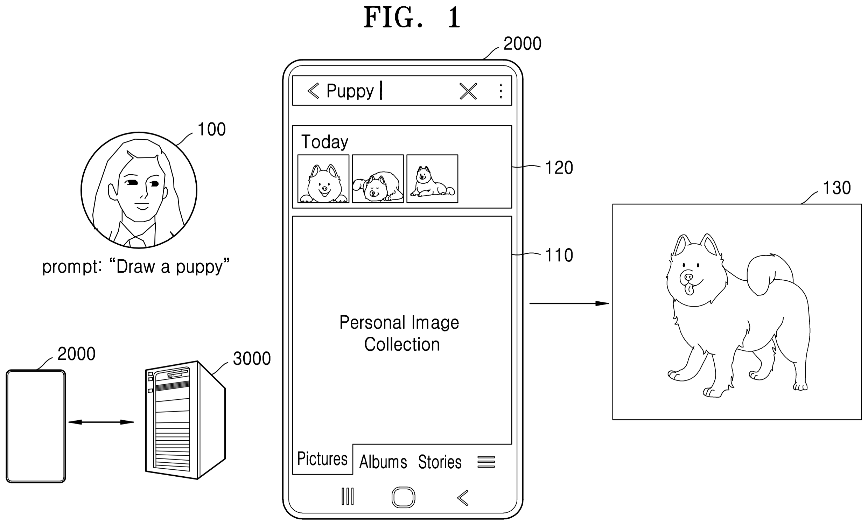

FIG. 1 is a diagram schematically illustrating an electronic device providing a personalized image, according to an embodiment of the disclosure.

In an embodiment of the disclosure, an electronic device 2000 and/or a server 3000 may provide an image personalization service for generating an image by using a generative model to a user 100. Image personalization technology of the disclosure allows the user 100 to generate a new image, which is synthetic data including his/her personalization feature by using image(s) owned by the user 100.

For example, when the user 100 inputs a prompt saying "Draw a puppy" requesting the electronic device 2000 to generate an image, the electronic device 2000 may search for and retrieve or otherwise obtain one or more images 120 related to a keyword "puppy" from a personal image collection 110 stored in a media storage of the electronic device 2000. The personal image collection 110 may include personal images owned by the user, which were not used to train the generative model.

The electronic device 2000 may generate data for image personalization by processing the retrieved one or more images 120. The data for image personalization may refer to embedding data obtained by converting the one or more images 120 into data of a vector representation. The data for image personalization generated from the images owned by the user is transmitted to the server 3000, and the server 3000 may generate a personalized image 130 by using the data for image personalization received from the electronic device 2000 when an inference operation using the generative model is performed.

The server 3000 may transmit the personalized image 130 to the electronic device 2000, and the electronic device 2000 may provide the personalized image 130 to the user 100. The personalized image 130 may include features of the one or more images 120 retrieved from the electronic device 2000. For example, based on the user's request to "draw a puppy", the personalized image 130 in which a puppy (e.g., a puppy raised by the user) included in an image owned by the user 1000 is drawn may be provided to the user.

In an embodiment of the disclosure, the server 3000 may provide an image personalization service to a plurality of different users. When the server 3000 provides image personalization to the plurality of users, the generative model does not have to be additionally trained about the personal image collection 110 of each of the plurality of users. In other words, the server 3000 does not provide each of the users with a generative model that is custom-trained about a personalization feature of each of the users. Instead, the personalized image 130 reflecting a feature included only in a user's personal image may be generated using a deployed generative model that is commonly available to other users. To this end, the electronic device 2000 generates data for image personalization and provides the data for image personalization to the server 3000. The phrase "model has been deployed", it means that the model has been transferred to an actual operating environment so that an inference operation may be performed, rather than an environment in which the model is trained (e.g., pre-trained and/or fine-tuned/trained) or tested. In other words, when a model is described as being "deployed", this means that the model is ready to provide a service after training is completed and performance validation is completed. However, because a service may be provided to individuals and/or a limited group, deployment does not necessarily mean that something should be publicly released.

In the disclosure, an image owned by a user which is used as data referenced for image personalization may be referred to as a "reference image", and data for image personalization generated using a "reference image" is referred to as "image feature information".

In an embodiment of the disclosure, the electronic device 2000 may be any of various types of devices for providing the personalized image 130 to the user 100. For example, the electronic device 2000 may be implemented as any of various types and forms of electronic devices including a display. Examples of the electronic device 2000 may include devices capable of displaying the personalized image 130 through a display, such as, but not limited to, a smart TV, a smartphone, a tablet PC, a laptop PC, a glasses-type display, and a head-mounted display (HMD). For example, the electronic device 2000 may be implemented as any of various types and forms of electronic devices that may be connected to a display by wire or wirelessly. Examples of the electronic device 2000 may include devices connected to a display by wire or wirelessly and capable of displaying the personalized image 130, such as, but not limited to, a set-top box and a desktop PC.

In an embodiment of the disclosure, the server 3000 may be a device for generating the personalized image 130 by using the generative model. The server 3000 may be a device capable of performing complex calculations and tasks using large-scale data such as training, inference, management, and deployment of the generative model. According to an embodiment of the disclosure, training of the generative model executed in the server 3000 may be performed by another computing device. The server 3000 may receive data for personalized image generation from the electronic device 2000, which is a client device, and may return the personalized image 130 to the electronic device 2000.

In an embodiment of the disclosure, the electronic device 2000 and the server 3000 for providing an image personalization service may be referred to as an "image personalization system". Alternatively, for convenience, the electronic device 2000 and the server 3000 for providing an image personalization service may be simply referred to as a "system". In the disclosure, an embodiment in which a personalized image is generated by an image personalization system and is provided to a user will be described. However, embodiments are not limited thereto, operations described herein may or may not be performed by the image personalization system.

In an embodiment of the disclosure, image personalization operations may be independently performed by the electronic device 2000. In this case, a generative model for generating the personalized image 130 may be stored in the electronic device 2000. The electronic device 2000 may generate the personalized image 130 by performing operations of the disclosure using the generative model. Because the electronic device 2000 has lower computing performance than the server 3000, the generative model used by the electronic device 2000 may a relatively lightweight AI model having resource requirements which may be tailored to the computing performance of the electronic device 2000.

In an embodiment of the disclosure, image personalization operations may be independently performed by the server 3000. In this case, the server 3000 may receive only an image personalization request from the electronic device 2000, may generate the personalized image 130 by performing operations of the disclosure, and may return the generated result to the electronic device 2000.

In an embodiment of the disclosure, image personalization operations may be performed separately by a plurality of electronic devices. For example, from among operations of the disclosure, "operation A" may be performed by "electronic device A" and "operation B" may be performed by "electronic device B". Examples of various methods of the disclosure such as those described above are obvious, and thus, a description thereof will be omitted for brevity in the disclosure.

Examples of operations in which the electronic device 2000 provides the personalized image 130 to the user 100 will be described below in more detail with the drawings below and descriptions thereof.

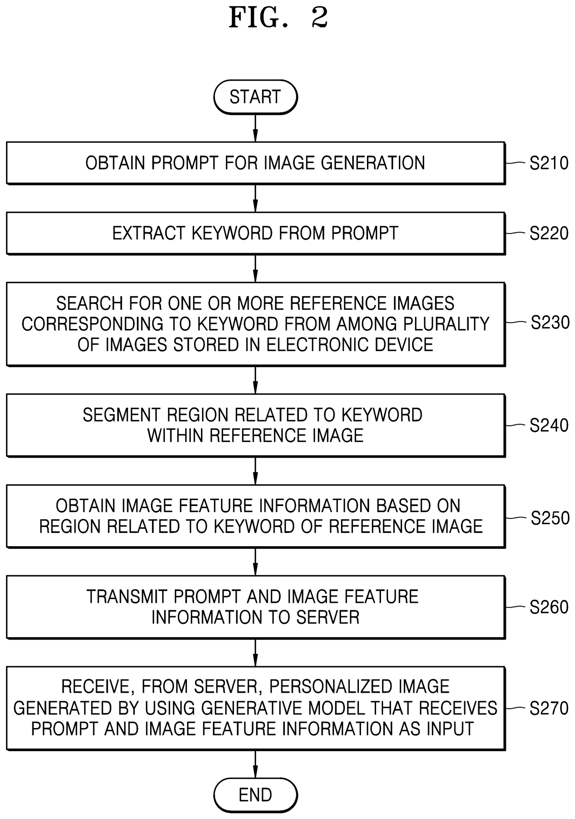

FIG. 2 is a flowchart for describing an operation in which an electronic device generates a personalized image, according to an embodiment of the disclosure.

Referring to FIG. 2, operations performed by the electronic device 2000 to generate a personalized image will be briefly described, and the operations will be described in detail with reference to subsequent drawings.

In operation S210, the electronic device 2000 may obtain a prompt for image generation.

The term "prompt" may refer to an input for starting or initiating an interaction with a generative model for generating an image. A prompt may be a text input or a voice input including one or more words and/or one or more sentences.

In an embodiment of the disclosure, the prompt may include natural language text. The natural language text may include various information that the generative model may use to generate an image, such as context, intent, task, and constraints. The electronic device 2000 may process the natural language using a natural language processing (NLP) model.

In an embodiment of the disclosure, the prompt may be received as a user input. For example, the electronic device 2000 may receive a user's text input. Alternatively, the electronic device 2000 may receive the user's voice input. The electronic device 2000 may convert the user's voice input into text by using automatic speech recognition (ASR).

In an embodiment of the disclosure, the prompt may be generated by the electronic device 2000. For example, the electronic device 2000 may receive an image input from the user. The electronic device 2000 may extract a text description of an image from the image. The electronic device 2000 may generate the prompt using any of various methods (e.g., image captioning) for extracting text from an image.

The prompt may correspond to various expressions which may represent the same/similar concept. For example, the prompt may correspond to expressions such as "user input", "input phrase", "user command", " directive", "starting sentence", "task query", "trigger sentence", and "message", but embodiments are not limited thereto.

In operation S220, the electronic device 2000 may extract keywords from the prompt.

The keywords may include words, phrases, or clauses indicating the essential part of the prompt. At least one keyword from among the extracted keywords may be a keyword for image personalization. When there are one or more keywords, a keyword for image personalization may be selected from among the one or more keywords. The keyword for image personalization may correspond to a personalization element reflected in a personalized image. For example, when the keyword for image personalization is "A", personalization may be applied to an element corresponding to "A" from among elements in the personalized image. There may be one or more keywords for image personalization. In the disclosure, the keyword for image personalization may also be referred to as a "personalization keyword". Alternatively, the keyword for image personalization may be simply referred to as a "keyword".

In an embodiment of the disclosure, the electronic device 2000 may parse the prompt to decompose the text into a plurality of components and extract one or more keywords from among the plurality of components.

In an embodiment of the disclosure, the electronic device 2000 may extract one or more keywords from the prompt using an NLP model. For example, the electronic device 2000 may analyze a sentence using a pre-trained language model, may determine the meaning and context of words in the sentence, and may extract one or more keywords.

The electronic device 2000 may determine a personalization keyword from among the one or more keywords extracted from the prompt.

In an embodiment of the disclosure, the electronic device 2000 may determine the extracted one or more keywords as personalization keywords. For example, the electronic device 2000 may determine all or some of the extracted one or more keywords as personalization keywords. In this case, a method by which the electronic device 2000 determines personalization keywords may be a rule-based method in which personalization keywords are predefined (e.g., predetermined/pre-registered/recently used/frequently used/determined based on context analysis), but the disclosure is not limited thereto.

In an embodiment of the disclosure, the electronic device 2000 may determine a personalization keyword based on a user input. For example, the electronic device 2000 may display the one or more keywords extracted from the prompt on a screen and may receive a user input selecting at least one of the one or more keywords displayed on the screen. The electronic device 2000 may determine the keyword corresponding to the user input as a personalization keyword.

The term "keyword" may correspond to various expressions which may represent the same/similar concept. For example, the term "keyword" may correspond to expressions such as "word", "term", "main word", "search term", "core term", "primary term", "related term", and "recommendations", but embodiments are not limited thereto.

In operation S230, the electronic device 2000 may search for one or more reference images corresponding to the keyword from among a plurality of images stored in the electronic device 2000. An operation in which the electronic device 2000 searches for one or more reference images corresponding to the keyword may include a process in which the electronic device 2000 searches for one or more images corresponding to the keyword and selects a reference image from among the searched and retrieved one or more images.

In an embodiment of the disclosure, the electronic device 2000 may search for one or more images based on the keyword in the electronic device 2000. For example, the electronic device 2000 may search for one or more images matching the keyword. Alternatively, the electronic device 2000 may search for one or more images from among the plurality of images stored in the electronic device 2000 by referring to the keyword. For example, the electronic device 2000 may search for one or more images matching a word (e.g., a synonym or a similar word) related to the keyword.

The electronic device 2000 may search for one or more images corresponding to the keyword from among a plurality of images stored in a local media storage of the electronic device 2000. That is, the electronic device 2000 does not search for an image corresponding to the keyword from among images released to the public domain, but may instead select, retrieve, or otherwise obtain one or more images corresponding to the keyword from among a plurality of personal images of the user stored in the local media storage of the electronic device 2000. The images stored in the local media storage may include images directly captured by the user and/or images obtained by the user from external sources (e.g., downloaded images among images released to the public domain and images received from other users). In an embodiment of the disclosure, the electronic device 2000 may find an image matching the keyword and/or an image matching a synonym or a similar word of the keyword from among various images released to the public domain through an external database (e.g., web).

In an embodiment of the disclosure, the electronic device 2000 may search for an image corresponding to the keyword using image metadata. Image metadata may include, but is not limited to, the title, description, image capturing location, image capturing date and time, person information, tag, etc. of an image. The image metadata may include information about various objects included in the image. The information about the various objects included in the image metadata may be obtained when the electronic device 2000 classifies the image, or detects an object in the image and performs object recognition. The image metadata may be automatically generated when a photograph is taken by the electronic device 2000. Alternatively, the image metadata may be manually input by the user. For example, the electronic device 2000 may provide an interface through which the user may input additional information about an image when or after capturing the image. In this case, the interface through which the additional information about the image may be input may be provided through any of various applications (e.g., a camera application, a gallery application, and a photograph editing application).

In an embodiment of the disclosure, the electronic device 2000 may generate the image metadata. The electronic device 2000 may use various image processing/analysis algorithms to generate the image metadata. For example, the electronic device 2000 may cluster images according to subjects and may tag a subject of images in an image cluster with metadata. Alternatively, the electronic device 2000 may extract a text description of an image from the image, may extract one or more keywords from the text description, and may tag the extracted keyword with metadata. Alternatively, the electronic device 2000 may perform image classification and may tag a class of images, which is a classification result, with metadata. However, a method by which the electronic device 2000 generates image metadata is not limited to the above examples.

In an embodiment of the disclosure, the electronic device 2000 may select a reference image from among the retrieved one or more images.

The term "reference image" may be an image selected from among the retrieved images corresponding to the keyword, and refers to an image that may be used for image personalization. For example, data indicating he reference image (e.g., image feature information described below) may be used as input data to the generative model, and thus, a feature of the reference image may be included in a personalized image generated by the generative model. For example, various features of the reference image such as background, object, style, subject, and context may be included in the personalized image. According to an embodiment, one or more reference images may be selected.

The term "reference image" may correspond to various expressions which may represent the same/similar concept. For example, the term "reference image" may correspond to expressions such as "image", "photograph", "reference photograph", "standard image/photograph", and "benchmark image/photograph", but embodiments are not limited thereto.

In an embodiment of the disclosure, the electronic device 2000 may generate the reference image based on a predefined or predetermined condition. For example, the electronic device 2000 may select images whose similarity to the keyword is equal to or greater than a threshold value from among the retrieved one or more images corresponding to the keyword as reference images. However, a condition under which the reference image is selected is not limited to the above example.

In an embodiment of the disclosure, the electronic device 2000 may determine or select the reference image based on a user input. For example, the electronic device 2000 may display the retrieved one or more images corresponding to the keyword on a screen and may receive a user input selecting at least one of the one or more images displayed on the screen. The electronic device 2000 may determine the image corresponding to the user input as the reference image.

In an embodiment of the disclosure, when the reference image is determined, the keyword and the reference image corresponding to the keyword may be stored as a text-image pair.

In operation S240, the electronic device 2000 may segment a region related to the keyword within the reference image. In other words, the electronic device 2000 may segment the reference image into a plurality of regions. The electronic device 2000 may determine a segment corresponding to the region related to the keyword from among segments of the reference image based on the keyword. For example, the electronic device 2000 may select a segment matching the keyword from among the segments of the reference image. The electronic device 2000 may determine a segment related to the keyword from among the segments of the reference image by referring to the keyword. For example, the electronic device 2000 may select a segment matching a word related to the keyword (e.g., a synonym or a similar word).

The region related to the keyword may be a region indicating a visual feature of the keyword in the image. For example, when the keyword is "object A", the region related to the keyword may refer to a region corresponding to "object A" in the image. The electronic device 2000 may perform image segmentation to segment the image into a plurality of regions based on an object, a foreground, a background, etc., included in the image from the reference image. In this case, the region related to the keyword may be selected from the plurality of segmented regions.

In an embodiment of the disclosure, the electronic device 2000 may determine the region related to the keyword by analyzing the reference image. For example, the electronic device 2000 may separate a plurality of semantic elements in the image using semantic segmentation. The electronic device 2000 may classify the plurality of semantic elements and may select a segment indicating the region related to the keyword based on a classification result.

In an embodiment of the disclosure, the electronic device 2000 may determine the region related to the keyword based on a user input. For example, the electronic device 2000 may separate a plurality of instances (e.g., objects) in the image using instance segmentation. The electronic device 2000 may display a segmentation result on a screen and may receive a user input selecting at least one of the segments displayed on the screen.

An image segmentation method performed by the electronic device 2000 is not limited to the above example. For example, the electronic device 2000 may use a panoptic segmentation method that is a combination of semantic segmentation and instance segmentation. Alternatively, the electronic device 2000 may select a segment indicating the region related to the keyword based on a user input (e.g., rectangular selection or free selection (lasso selection)) designating a region of an object corresponding to the keyword in the reference image.

In operation S250, the electronic device 2000 may obtain image feature information based on the region related to the keyword of the reference image.

In the disclosure, data used to reflect a personalization element when generating an image may be referred to as "reference data". For example, the reference data may include text and/or an image. In detail, examples of the text included in the reference data may include, but are not limited to, a text description of the image, a keyword, a synonym of the keyword, and a similar word of the keyword. Also, examples of the image included in the reference data may include, but are not limited to, a raw reference image and a region (e.g., a segment) related to a keyword of the reference image. The term "reference data" may correspond to various expressions which may represent the same/similar concept. In an embodiment, the reference data may be included in data which may be referred to as "data for personalization".

In an embodiment of the disclosure, the electronic device 2000 may generate image feature information by preprocessing the reference data. The image feature information may include various data related to a feature of the image, such as, but not limited to, a visual pattern, attribute, structure, or text corresponding to the image extracted from the image.

The image feature information may be used as an input to the generative model. For example, the image feature information may be obtained through certain preprocessing processes that allow the image and/or the text of the reference data to be used as an input to the generative model.

In an embodiment of the disclosure, the image feature information may be obtained by a vector embedding that is a preprocessing method of converting data into a vector representation. The electronic device 2000 may generate a reference embedding by converting the reference data into a vector representation. The reference embedding refers to data obtained by converting the reference data into a vector representation. For example, the electronic device 2000 may convert the region related to the keyword of the reference image into data of a vector representation. Also, for example, the electronic device 2000 may convert a text-image pair including the keyword and the reference image into data of a vector representation. Also, for example, the electronic device 2000 may convert a text-image pair including the keyword and the region related to the keyword of the reference image into data of a vector representation. The electronic device 2000 may generate a reference embedding having a plurality of vector values by converting the keyword and the reference image into a vector representation including normalized values. The electronic device 2000 may perform tokenization for dividing data into small unit elements and may convert each token into a unique vector value. The reference embedding may include information about the keyword and the reference image and may be used as input data when the generative model generates a personalized image.

The term "reference embedding" may correspond to various expressions which may represent the same/similar concept. For example, the term "reference embedding" may correspond to expressions such as "vector", "embedding", "vector embedding", "vector representation", or "vector encoding", but embodiments are not limited thereto. In an embodiment, the reference embeddings may be included in the data which may be referred to as "data for personalization".

In an embodiment of the disclosure, the electronic device 2000 may generate the reference embedding by encoding the text-image pair of the keyword and the reference image corresponding to the keyword using an encoder. The encoder may be trained to receive the text and/or the image and compress information of the text and/or the image.

A preprocessing method by which the electronic device 2000 obtains the image feature information is not limited to a vector embedding of converting data into a vector representation. For example, the electronic device 2000 may perform preprocessing such as tokenization or normalization on the text and may perform preprocessing such as normalization, resizing, cropping, or image attribute changing (brightness, contrast, or color) on the image. That is, the electronic device 2000 may obtain the image feature information by processing the reference data by using any of various methods.

Because there is a limit to listing all cases where the electronic device 2000 obtains the image feature information, the disclosure will be described assuming that a reference embedding obtained by converting the reference data into a vector is used as an example of image feature information. However, vector embedding is an example for describing a technical implementation method of the disclosure. The disclosure may also be implemented by using similar methods such as preprocessing methods listed in the above example, including using vector embedding.

In operation S260, the electronic device 2000 may transmit the prompt and the image feature information to the server 3000.

The server 3000 may operate the generative model. In order for the server 3000 to operate the generative model, the server 3000 may be a device having relatively high computing performance in comparison with the electronic device 2000, which may allow the server 3000 to perform more calculations than the electronic device 2000. The server 3000 may perform training and/or inference of the generative model, which requires a large amount of computation. The server 3000 may generate a personalized image using the generative model and may transmit the personalized image to the electronic device 2000.

In an embodiment of the disclosure, the generative model may be a version deployed after training of the generative model is completed. The server 3000 may generate a "personalized image" in which a feature of an image owned by the user is reflected using the deployed generative model, without retraining the generative model. For example, when the server 3000 generates a personalized image, existing weights of the deployed generative model are used and the image feature information (e.g., the reference embedding) is used as input data only during an inference operation using the generative model. Accordingly, even when the generative model is not trained about a personalization feature of the user (e.g., images owned by the user), the generative model may generate a personalized image including a feature of the reference image, which is a personal image of the user.

In an embodiment of the disclosure, the generative model may generate a prompt embedding by encoding the prompt received from the electronic device 2000. Alternatively, the prompt embedding may be generated by the electronic device 2000 when the reference embedding is generated in operation S250. The generative model generates a personalized image using the prompt embedding and the reference embedding.

The electronic device 2000 may provide various advantages by transmitting the image feature information including preprocessed data to the server 3000, without transmitting the reference data to the server 3000. For example, the electronic device 2000 may reduce a data processing amount of the server 3000 by transmitting the reference embedding obtained by converting the reference image into a vector representation to the server 3000. Also, by transmitting only the reference embedding to the server 3000, the electronic device 2000 may prevent the images stored only in the media storage of the electronic device 2000 from being shared so that a personalized image generated while the user's privacy is protected.

In some embodiments of the disclosure, the electronic device 2000 may transmit the reference data to the server 3000. In this case, the generative model may receive the reference data as an input, may perform preprocessing, and may generate a personalized image. Alternatively, the generative model may receive the preprocessed reference data as an input and may generate a personalized image.

In operation S270, the electronic device 2000 may receive the personalized image from the server 3000. There may be one or more personalized images.

The electronic device 2000 may display the personalized image received from the server 3000.

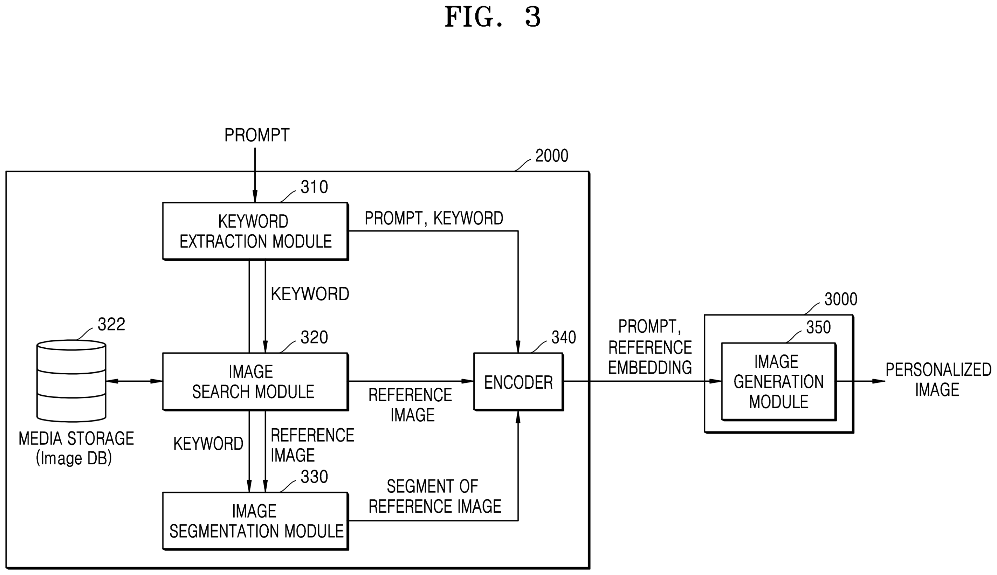

FIG. 3 is a diagram illustrating operations of an electronic device and a server, according to an embodiment of the disclosure.

Referring to FIG. 3, the electronic device 2000 may include at least a keyword extraction module 310, an image search module 320, an image segmentation module 330, and an encoder 340. The server 3000 may include an image generation module 350. The modules illustrated in FIG. 3 may be elements implemented when at least one processor included in the electronic device 2000 executes a program or instructions stored in a memory included in the electronic device 2000. Accordingly, operations performed by the modules included in the electronic device 2000 described below may be performed by the at least one processor included in the electronic device 2000.

The keyword extraction module 310 extracts one or more keywords by processing a prompt. When the one or more keywords are extracted, all or some of the extracted one or more keywords may be determined or selected as personalization keywords. There may be one or more personalization keywords.

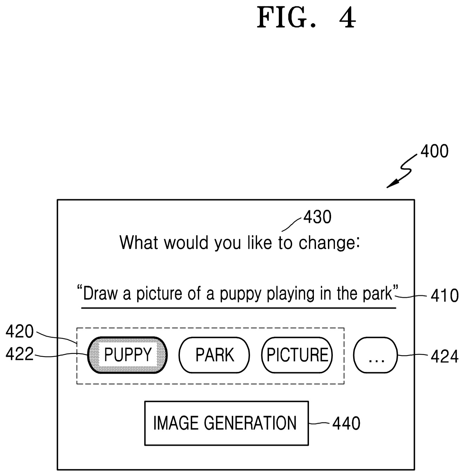

The keyword may be transmitted to the encoder 340 to be converted into a vector, may be transmitted to the image search module 320 to be used to search for an image, and may be transmitted to the image segmentation module to be used to segment an image. An example of the keyword extraction module 310 is further described with reference to FIG. 4.

The image search module 320 searches for one or more images corresponding to the keyword from among images stored in a media storage 322. The image search module 320 may search for one or more images corresponding to the keyword using image metadata. When the one or more images are searched, a reference image to be reflected in a personalized image may be determined or selected from among the searched and retrieved one or more images. There may be one or more reference images.

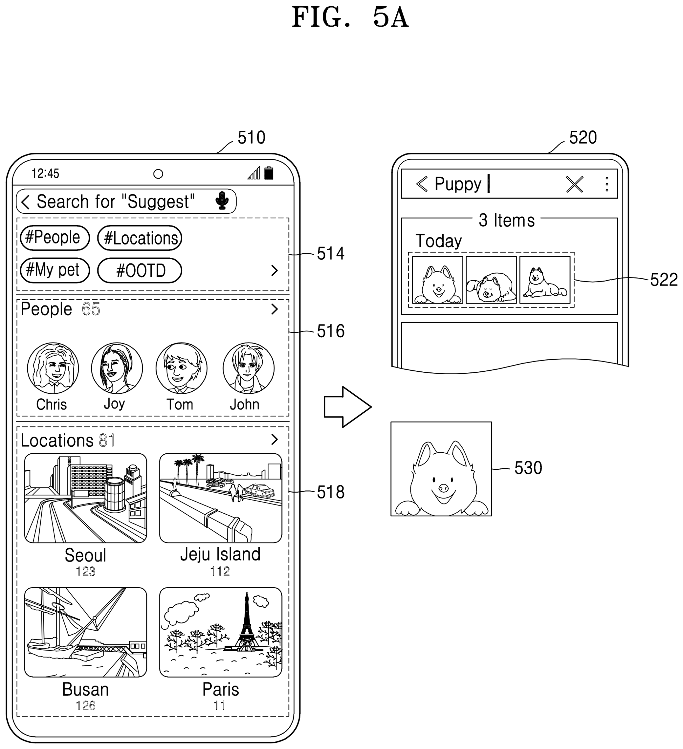

The reference image may be selected by the electronic device 2000 based on a predetermined condition and may be selected based on a user input. The reference image may be transmitted to the image segmentation module 330 to be segmented, and may be transmitted to the encoder 340 to be converted into a vector. An example of the image search module 320 is further described with reference to FIGS. 5A-5B.

The image segmentation module 330 segments and determines a region related to the keyword within the reference image. There may be one or more regions related to the keyword.

The region related to the keyword may be determined based on a result (e.g., semantic segmentation) obtained after the electronic device 2000 analyzes the keyword and the reference image, and a region to be segmented may be selected based on a user input. The image segmentation module 330 may obtain a segment of the reference image by extracting the region related to the keyword. The segment of the reference image may be transmitted to the encoder 340 to be converted into a vector. An example of the image segmentation module 330 is further described with reference to FIG. 4.

In an embodiment of the disclosure, an operation of the image segmentation module 330 may be omitted. In this case, an operation of using the segment of the reference image may be replaced with an operation of using the reference image.

The encoder 340 converts image and/or text data into a vector representation.

For example, the encoder 340 may generate a prompt embedding by converting the prompt into a vector representation. Alternatively, the prompt may be transmitted as an original form to the server 3000 and may be encoded by the server 3000.

For example, the encoder 340 may generate a reference embedding by converting a text-image pair including the keyword and the reference image into a vector representation.

For example, the encoder 340 may generate a reference embedding by converting a text-image pair including the keyword and the segment of the reference image into a vector representation.

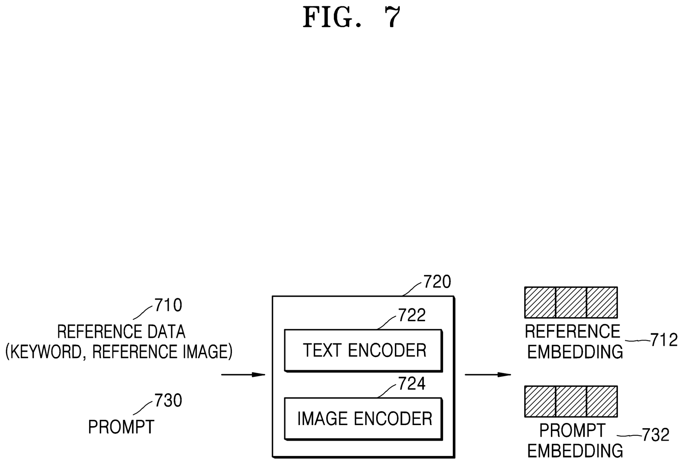

The prompt (or the prompt embedding) and the reference embedding may be transmitted to the server 3000 so that the server 3000 uses the prompt and the reference embedding to generate a personalized image. An example of the encoder 340 is further described with reference to FIG. 7.

The image generation module 350 generates a personalized image. For the personalized image, a generative model may be used. The generative model may be an Al model using a mechanism (e.g., cross-attention) of processing a prompt-image correlation to generate an image based on the prompt (or the prompt embedding).

In an embodiment of the disclosure, the generative model may be a version deployed after training is completed. In this case, the reference embedding received from the electronic device 2000 may be used only during an inference operation of the generative model. That is, the generative model is an Al model that receives the prompt (or the prompt embedding) and the reference embedding as an input and outputs a personalized image.

The server 3000 may generate a "personalized image" in which a feature of an image owned only by a user is reflected using the image generation module 350, without retraining the generative model.

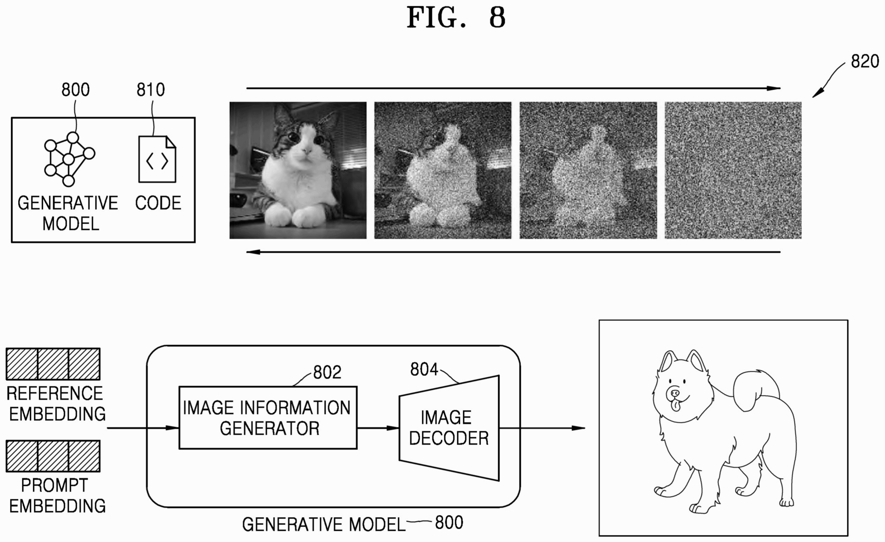

An example of the image generation module 350 is further described with reference to FIG. 8.

FIG. 4 is a diagram for describing an operation in which an electronic device extracts a keyword, according to an embodiment of the disclosure.

In an embodiment of the disclosure, the electronic device 2000 may display one or more keywords 420 that are extracted. As shown in FIG. 4, a graphical interface 400 showing a result obtained after the electronic device 2000 extracts a keyword (hereinafter, graphical interface 400) is illustrated. Various elements may be included in the graphical interface 400. For example, a prompt 410, one or more keywords 420, and various interface elements (e.g., text 430 and a button 440) for guiding image personalization may be included in the graphical interface 400. However, some of the above elements may be omitted or other elements may be added.

In an embodiment of the disclosure, the prompt 410 input to generate a personalized image may be displayed on the graphical interface 400. For example, the prompt 410 saying "Draw a picture of a puppy playing in the park" input by a user may be included in the graphical interface 400. The electronic device 2000 may display the prompt 410 on the graphical interface 400 so that the user checks whether the prompt 410 is correctly input. The electronic device 2000 may determine the prompt 410 based on a user input that checks the prompt 410. Alternatively, the electronic device 2000 may change the prompt 410 based on a user input for changing the prompt 410.

In an embodiment of the disclosure, the one or more keywords 420 that are extracted may be displayed on the graphical interface 400. For example, the keywords 420 such as "puppy", "park", and "picture" extracted from the prompt 410 may be included in the graphical interface 400.

The electronic device 2000 may parse the prompt to decompose text into a plurality of components, and may extract the one or more keywords 420 from among the plurality of components. For example, the electronic device 2000 may perform text preprocessing for removing special characters, etc. in a sentence. The electronic device 2000 may create a list of words such as nouns, adjectives, and verbs and may select at least some of the words. In this case, a word frequency, predetermined word importance, etc. may be used, but embodiments are not limited thereto.

The electronic device 2000 may extract the one or more keywords 420 from the prompt 410 using an NLP model. For example, the electronic device 2000 may analyze the sentence using a pre-trained language model. For example, the electronic device 2000 may tokenize the sentence and may perform semantic analysis to determine the meaning, context, and intent of the words in the sentence. The electronic device 2000 may extract the one or more keywords 420 based on a sentence analysis result.

In an embodiment of the disclosure, the electronic device 2000 may determine a personalization keyword 422 from among the one or more keywords 420 extracted from the prompt 410. Because the personalization keyword 422 may be all or some of the one or more keywords 420, the personalization keyword 422 may be included in the one or more keywords 420. The personalization keyword 422 may be automatically determined by the electronic device 2000 or may be manually determined based on a user input.

In an embodiment of the disclosure, the electronic device 2000 may change the one or more keywords 420 based on a user input. For example, when the user selects an interface element 424 for keyword change in the graphical interface 400, a word "playing", which as not previously extracted as a keyword, may be added to the one or more keywords 420 and displayed.

In an embodiment of the disclosure, various interface elements (e.g., the text 430 and the button 440) for guiding image personalization may be displayed on the graphical interface 400. For example, the text 430 (e.g., "What would you like to change?") asking what point the user wants to focus on to generate a personalized image may be displayed on the graphical interface 400. Alternatively, the button 440 (e.g., an "IMAGE GENERATION" button) that allows the user to proceed to a next step for image personalization may be displayed on the graphical interface 400.

In an embodiment of the disclosure, the electronic device 2000 may propose a keyword related to the prompt. For example, the electronic device 2000 may recommend a word, which is not included in the prompt 410 but is highly related to the prompt, to be included in the one or more keywords 420. Alternatively, the electronic device 2000 may recommend a keyword, which was previously used by the user based on a personalization image generation history of the user, to be included in the one or more keywords 420.

FIG. 5A is a diagram for describing an operation in which an electronic device searches for an image, according to an embodiment of the disclosure.

In an embodiment of the disclosure, the electronic device 2000 may search for one or more images corresponding to a keyword from among images of a user stored in a local media storage.

In an embodiment of the disclosure, the images stored in the media storage may include metadata. Image metadata may include, but is not limited to, a tile, description, image capturing location, image capturing date and time, person information, and tag of an image. The image metadata may include information about various objects included in the image. The information about the various objects included in the image metadata may be obtained when the electronic device 2000 classifies the image, detects an object in the image, and performs object recognition. The image metadata may be automatically generated when a photograph is taken by the electronic device 2000. Alternatively, the image metadata may be generated by the electronic device 2000 by analyzing the stored image. Alternatively, the image metadata may be manually input by the user.

For convenience of explanation, the images stored in the media storage will be described with reference to a screen 510 of an application on which the images stored in the media storage are visually output. The screen 510 of the application may be displayed on a screen of the electronic device 2000.

In an embodiment of the disclosure, the images stored in the media storage of the electronic device 2000 may be pre-arranged for image search. For example, the electronic device 2000 may group the images stored in the media storage according to subjects through image clustering.

In more detail, for example, the images stored in the media storage may be divided into a plurality of image groups 514 (#People, #Location, #My pet, #OOTD (which may refer to outfit of the day)).

Also, each of the plurality of image groups 514 may be divided into sub-groups. For example, a people group 516 may include sub-groups respectively corresponding to persons (e.g., Chris, Joy, Tom, and John). Images of the persons may be respectively included in the sub-groups. Alternatively, a location group 518 may include sub-groups respectively corresponding to locations (e.g., Seoul, Jeju Island, Busan, and Paris). Images of the locations may be respectively included in the sub-groups.

When the electronic device 2000 searches for an image corresponding to a keyword, the electronic device 2000 may use information (e.g., image group information) that is pre-arranged based on metadata. However, the disclosure is not limited thereto, and the electronic device 2000 may search for an image corresponding to a keyword by using various methods.

For example, the electronic device 2000 may search for an image corresponding to a keyword using raw metadata. The raw metadata may include metadata that is generated by the electronic device 2000 or added by the user. For example, class information obtained by the electronic device 2000 through image analysis (e.g., image captioning, image classification, or object recognition) may be included in the metadata. Alternatively, information directly tagged by the user for the image may be included in the metadata.

In an embodiment of the disclosure, the electronic device 2000 may display one or more images 522 that are searched and retrieved. For example, the electronic device 2000 may display the one or more images 522 corresponding to a keyword "puppy".

A reference image 530 may be determined or selected from among the retrieved one or more images 522. For example, the electronic device 2000 may determine the reference image 530 based on a predetermined condition. For example, the electronic device 2000 may select images having a similarity to the keyword is equal to or greater than a threshold value from among the retrieved one or more images 522 may be selected as the reference images 530. However, the predetermined condition of the electronic device 2000 is not limited to the above example. Alternatively, the electronic device 2000 may receive a user input selecting at least one of the one or more images 522 displayed on a screen. The electronic device 2000 may determine an image corresponding to the user input as the reference image 530.

In an embodiment of the disclosure, there may be one or more reference images 530. When a plurality of reference images 530 are selected, the electronic device 2000 may apply a weight to each of the reference images 530 based on a user input.

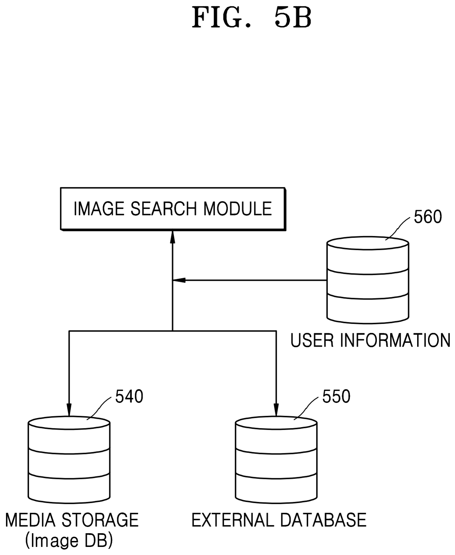

FIG. 5B is a diagram for describing an operation in which an electronic device searches for an image, according to an embodiment of the disclosure.

The electronic device 2000 may search for one or more images corresponding to a keyword inside and/or outside the electronic device 2000 using an image search module. In an embodiment of the disclosure, the electronic device 2000 may determine a database in which images are to be searched. For example, the electronic device 2000 may search for images in at least one of a media storage 540 or an external database 550 based on a user input.

In an embodiment of the disclosure, the electronic device 2000 may search for one or more images corresponding to the keyword from among images stored in the media storage 540, which may be, or may include, an image database. This operation has been described with reference to FIG. 5A, and thus, a repeated description will be omitted for brevity.

In an embodiment of the disclosure, the electronic device 2000 may search for one or more images corresponding to the keyword from among images stored in the external database 550. For example, the electronic device 2000 may search for an image matching the keyword and/or an image matching a synonym or a similar word of the keyword from among various images shared on the web using a search engine. The electronic device 2000 may search for one or more images corresponding to the keyword in a web page or an image sharing platform which supports image search. The electronic device 2000 may provide an image search result to a user. For example, the electronic device 2000 may display the image search result on a screen.

The electronic device 2000 may determine or select a reference image from among the searched and retrieved one or more images. This operation has been described with reference to FIG. 5A, and thus, a repeated description will be omitted for brevity.

In an embodiment of the disclosure, the electronic device 2000 may use user information 560 when performing image search. The user information 560 may include various items indicating information related to the user. The user information may include, for example, but is not limited to, profile information, preference and interest information, history, and activity record information.

The profile information may include basic information about the user. For example, the user profile may include, but is not limited to, name, gender, date of birth, residence, current location of the user, travel route, and profile photograph. The profile information may be obtained by a user input.

The preference and interest information may include various information related to the user's personal taste and interest in various categories. In an embodiment of the disclosure, the preference and interest information may be obtained by a user input. In an embodiment of the disclosure, the preference and interest information may be collected by the electronic device 2000. For example, the electronic device 2000 may collect and store information related to the user's preference and interest, such as content for which the user clicked on a "like" button in SNS services, and emojis, emoticons, and words that the user frequently used in message services.

The history and activity record information may include various information related to the user's use of the electronic device 2000. For example, the history and activity record information may include, but is not limited to, search history, purchase history, service use history, web visit history, and application history.

The electronic device 2000 may use the user information 560 when searching for one or more images related to the keyword from the media storage 540 and/or the external database 550. The electronic device 2000 may refine and process data in the user information 560 into a form available for image search.

The electronic device 2000 may search for one or more images related to the keyword and may filter images matching the user's preference and interest or similar to the user's preference and interest. For example, the electronic device 2000 may filter images matching the user's preference and interest or similar to the user's preference and interest, based on a keyword, a content category, a color, and a style related to the user's interest. Accordingly, images suitable for the user's preference may be included in an image search result.

The electronic device 2000 may determine or select a reference image from among the searched and retrieved one or more images. This operation has been described with reference to FIG. 5A, and thus, a detailed description will be omitted for brevity.

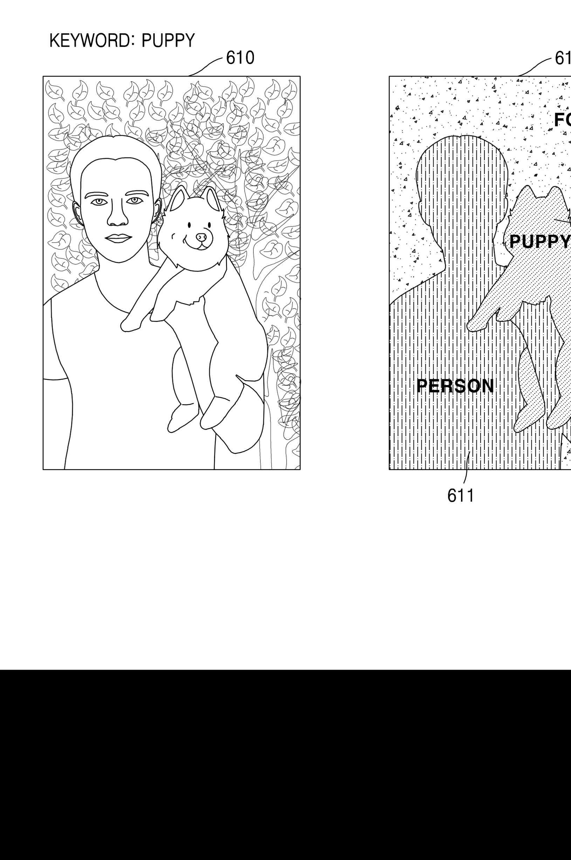

FIG. 6 is a diagram for describing an operation in which an electronic device segments an image, according to an embodiment of the disclosure.

In an embodiment of the disclosure, the electronic device 2000 may segment a region related to a keyword within a reference image 610.

The region related to the keyword may be a region indicating a visual feature of the keyword in the image. For example, when the keyword is "object A", the region related to the keyword refers to a region corresponding to "object A" in the image. For example, when the keyword is "puppy", the region refers to a region corresponding to "puppy" in the image.

In an embodiment of the disclosure, the electronic device 2000 may segment an image into a plurality of regions based on an object, a foreground, and a background included in the image from the reference image 610 by performing image segmentation. For example, when image segmentation is performed, the reference image 610 may be divided into a first region 611 corresponding to an object (e.g., a person), a second region 612 corresponding to an object (e.g., a puppy), and a third region 613 corresponding to a background (e.g., a forest).

The region related to the keyword may be selected from among the plurality of segmented regions. In the example of FIG. 6, the second region 612 may be determined or selected as the region corresponding to the keyword. The electronic device 2000 may segment the region corresponding to the keyword from the reference image 610 and may separate only the segmented region. The separated segment may be referred to as a "segment 620 of the reference image 610".

In an embodiment of the disclosure, the electronic device 2000 may determine the region related to the keyword by analyzing the reference image 610.

For example, the electronic device 2000 may separate a plurality of semantic elements in the image using semantic segmentation. The electronic device 2000 may classify the plurality of semantic elements and may select a segment indicating the region related to the keyword based on a classification result. For example, the electronic device 2000 may segment the reference image 610 into the first region 611, the second region 612, and the third region 613. The electronic device 2000 may classify the first region 611 as a person, may classify the second region 612 as a puppy, and may classify the third region 613 as a forest. The electronic device 2000 may determine the second region 612 corresponding to the puppy as the region related to the keyword. Accordingly, the segment 620 of the reference image 610 corresponding to the second region 612 may be extracted.

In an embodiment of the disclosure, the electronic device 2000 may determine or select the region related to the keyword based on a user input.

For example, the electronic device 2000 may separate a plurality of instances (e.g., objects) in the image using instance segmentation. The electronic device 2000 may display a segmentation result on a screen and may receive a user input selecting at least one of segments displayed on the screen. In detail, for example, the electronic device 2000 may segment the reference image 610 into the first region 611, the second region 612, and the third region 613 and may display a segmentation result on the screen. The electronic device 2000 may determine the second region 612 as the region related to the keyword based on a user input selecting the second region 612. Accordingly, the segment 620 of the reference image 610 corresponding to the second region 612 may be extracted.

An image segmentation method performed by the electronic device 2000 is not limited to the above example. For example, the electronic device 2000 may use a panoptic segmentation method that is a combination of semantic segmentation and instance segmentation. Alternatively, the electronic device 2000 may select the segment 620 of the reference image 610 indicating the region related to the keyword, based on a user input (e.g., rectangular selection or free selection (lasso selection)) designating a region of an object corresponding to the keyword in the reference image.

In an embodiment of the disclosure, the electronic device 2000 may store the keyword and the reference image 610 corresponding to the keyword as a text-image pair. In an embodiment of the disclosure, the electronic device 2000 may store the keyword and the segment 620 of the reference image 610 corresponding to the keyword as a text-image pair. The stored text-image pair may be encoded by an encoder.

FIG. 7 is a diagram for describing an operation in which an electronic device generates a vector representation, according to an embodiment of the disclosure.

In an embodiment of the disclosure, the electronic device 2000 may generate a reference embedding 712 by converting a key word and a reference image (or a segment of the reference image) into a vector representation.

In FIG. 7, for convenience of explanation, a text-image pair of the keyword and the reference image (or the segment of the reference image)may be included in reference data 710. In an embodiment, the text-image pair of the keyword and the reference image may be expressed as {keyword, reference image}.

The electronic device 2000 may encode the reference data 710 using an encoder 720. The encoder 720 may include a text encoder 722 and an image encoder 724. The encoder 720 may be trained to find a relationship between text and an image and generate a common vector representation between the text and the image. The encoder 720 may be implemented using a neural network architecture capable of processing text and an image or through a modification of the neural network architecture. For example, the encoder 720 may be implemented based on, but not limited to, a contrastive language-image pretraining (CLIP) architecture.

In an embodiment of the disclosure, the electronic device 2000 may convert the reference data 710 into a vector representation to generate the reference embedding 712, which is data for image personalization, and may transmit the reference embedding 712 to the server 3000.

In an embodiment of the disclosure, the electronic device 2000 may convert a prompt 730 into a vector representation to generate a prompt embedding 732. The electronic device 2000 may transmit the prompt embedding 732 to the server 3000. The prompt 730 may be transmitted to the server 3000 and then may be converted into the prompt embedding 732 in the server 3000.

FIG. 8 is a diagram for describing an operation in which a server generates a personalized image, according to an embodiment of the disclosure.

In an embodiment of the disclosure, the server 3000 may generate a personalized image. The server 3000 may generate a personalized image by applying or providing data (e.g., a reference embedding and a prompt embedding) received from the electronic device 2000 as input data to a generative model 800. The generative model 800 may include an image information generator 802 and an image decoder 804.

In an embodiment of the disclosure, the generative model 800 may process input data that is various types of modalities according to various conditionings. For example, the generative model 800 may receive text and may generate a text-to-image from the text, or may receive an image and may generate an image-to-image from the image. In FIG. 8, the generative model 800 that processes a prompt, which is text, as an input will be described.

In an embodiment of the disclosure, the generative model 800 may be a model to which classifier-free guidance (CFG) method is applied. When conditions for generating an image from text from among conditioning options are described as an example, in a process of training the generative model 800, training of the generative model 800 may be performed as conditions in which text was given are randomly removed. Accordingly, image generation of the generative model 800 may be guided as a tradeoff between a conditional likelihood that is the probability that an image is generated when text is given and an unconditional likelihood that is the probability that an image is generated without text is adjusted. During an inference operation of the generative model 800 trained through the above process, a CFG scale s may be used as an input parameter. As a higher CFG scale value is input, the probability that the generative model 800 generates an image similar to the prompt may increase but image quality may decrease. As a lower CFG scale value is input, the quality of an image generated by the generative model 800 may be improved but a similarity with the prompt may decrease.

In an embodiment of the disclosure, the generative model 800 may be deployed after training is completed. A training process of the generative model 800 may include, but is not limited to, a diffusion-reverse diffusion process 820 that is a diffusion process of adding noise stepwise to an original image and a reverse diffusion process of restoring the original image by denoising the noise from the noisy image.

In an embodiment of the disclosure, the diffusion-reverse diffusion process 820 of the training process of the generative model 800 may be performed by the image information generator 802 of the generative model 800. In this case, the image information generator 802 may include a noise predictor for processing the reverse diffusion process. The noise predictor may be implemented using a neural network architecture or through a modification of the neural network architecture. For example, the noise predictor may be implemented based on, but not limited to, a U-Net architecture.

In the diffusion-reverse diffusion process 820, training is performed by adding noise to an image stepwise, predicting the amount of noise, and removing the noise. In this case, in the training process of the generative model 800 for generating an image from text, to find a text-image relationship, an attention mechanism (e.g., cross-attention) may be used to merge prompt embeddings obtained by converting prompts (e.g., text), with the image which noise is added stepwise.

In an embodiment of the disclosure, the reference embedding is used only during an inference operation of the generative model 800. The inference operation of the generative model 800 may be executed by an inference code 810. When the server 3000 executes the inference operation using the inference code 810, the reference embedding and the prompt embedding may be used as input data to the generative model 800.

The image information generator 802 of the generative model 800 may process the input data (e.g., an embedding) to generate a multi-dimensional information array (e.g., a tensor) used by the image decoder 804 to generate an image. The image decoder 804 may output a personalized image by converting the tensor output from the image information generator 802.

In an embodiment of the disclosure, the server 3000 may apply a weight to a reference image based on a user input. In this case, an input selecting a weight may be obtained from the electronic device 2000 of a user and may be transmitted to the server, but the disclosure is not limited thereto. When the server 3000 performs an inference operation using the generative model 800, the server 3000 may receive, as input parameters, a CFG scale sₚ for the prompt and a CFG scale sᵣ for a reference. In this case, as an sₚ value increases, a personalized image similar to the prompt may be generated, and an sᵣvalue increases, a personalized image similar to the reference (e.g., the keyword or the reference image) may be generated.

In an embodiment of the disclosure, the server 3000 may receive a plurality of CFG scales sᵣ for the reference. For example, the reference ={(keyword 1, image 1), ..., (keyword n, image n)}. The server may receive CFG scales={s_{r1, ...,} sᵣₙ} respectively corresponding to the references and may perform an inference operation using the generative model 800 to adjust degrees to which the plurality of references are reflected in a personalized image.

Therefore, the server 3000 may perform an inference operation by using the generative model 800 that is deployed after training is completed and may use the reference embedding as input data only during the inference operation.

Because the reference image used to generate the reference embedding may be an image stored only in a local media storage of the user, the reference image may be data which was not used for training the deployed generative model 800. That is, an image personalization service provided by the server 3000 does not provide personalization by additionally training the deployed generative model 800 about the reference image owned by the user. Instead, because the server 3000 may use the reference embedding during an inference operation of the generative model 800, the server 3000 may generate a personalized image to include a feature of the reference image without retraining the generative model 800.

That is, the feature of the reference image that was not used for training the generative model 800 may be included in the personalized image generated by the generative model 800.

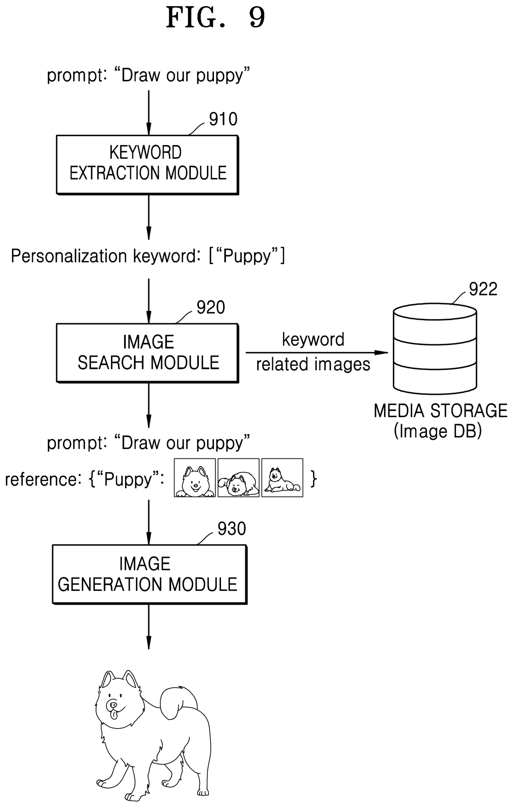

FIG. 9 is a diagram for describing an example in which an electronic device provides a personalized image, according to an embodiment of the disclosure.

In an embodiment of the disclosure, the electronic device 2000 may obtain a prompt. For example, the electronic device 2000 may obtain a prompt saying "Draw our puppy". When "our puppy" is mentioned below, it is assumed that a user intended the puppy he/she raises.

The electronic device 2000 may extract a keyword from the obtained prompt by using a keyword extraction module 910. For example, the electronic device 2000 may extract "puppy" as a keyword. When there is one extracted keyword, the extracted keyword may be used as a personalization keyword. Alternatively, although not shown in FIG. 9, the electronic device 2000 may extract "our" and "puppy" as keywords. In this case, both "our" and "puppy" may be determined or selected as personalization keywords, only "our" may be determined or selected as a personalization keyword, or only "puppy" may be determined or selected as a personalization keyword.

The electronic device 2000 may search for one or more images corresponding to the keyword from among images stored in a media storage 922 of the electronic device 2000 using an image search module 920. In this case, image metadata may be used. For example, the electronic device 2000 may provide puppy images stored in the media storage 922 as a search result using the image metadata. In this case, the image search result may include images of the puppy raised by the user, which was referred to as our puppy, and images of other puppies stored in the media storage 922. In this case, the user may check the image search result, and the electronic device 2000 may receive a user input selecting the puppy raised by the user as a reference image.

Alternatively, the image metadata may include tags associated with "our puppy". In this case, the image search result may display images of the puppy raised by the user, which was referred to as our puppy.

When the reference image is determined, a region related to the keyword within the reference image may be separately segmented.

The electronic device 2000 may generate a reference embedding and may transmit the reference embedding to the server 3000. The reference embedding may be obtained by converting a text-image pair into a vector representation using an encoder. The reference embedding may be obtained by converting, for example, a keyword-reference image pair into a vector representation. Alternatively, for example, the reference embedding may be obtained by converting a keyword-reference image segment pair into a vector representation.

The server 3000 may generate a personalized image using the image generation module 930. As a result of performing operations according to the above example, the personalized image may be a new image in which the puppy raised by the user is drawn. The server 3000 may transmit the personalized image to the electronic device 2000, and the electronic device 2000 may display the personalized image.

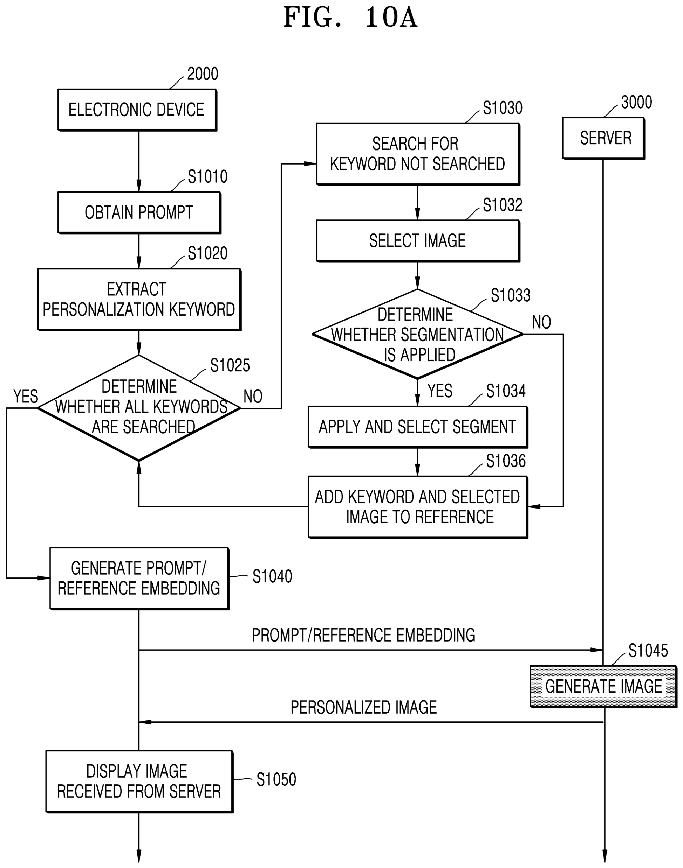

FIG. 10A is a flowchart illustrating operations of an electronic device and a server, according to an embodiment of the disclosure.

In an embodiment of the disclosure, the electronic device 2000 may interact with the server 3000 to generate a personalized image. For example, a system for generating a personalized image may include the electronic device 2000 and the server 3000, and the electronic device 2000 may operate as a client.

In operation S1010, the electronic device 2000 obtains a prompt. Operation S1010 corresponds to operation S210 of FIG. 2, and thus, a repeated description will be omitted for brevity.

In operation S1020, the electronic device 2000 extracts a personalization keyword from the prompt. Operation S1020 corresponds to operation S220 of FIG. 2, and thus, a repeated description will be omitted for brevity.

In an embodiment of the disclosure, there may be a plurality of keywords for personalization. When the electronic device 2000 extracts a plurality of keywords, at operation S1025 the electronic device 2000 may determine whether images corresponding to all of the plurality of keywords have been searched and retrieved. Operations S1030 to S1036 may be repeatedly performed based on a result of operation S1025 until images corresponding to all of the keywords are searched.

In operation S1030, the electronic device 2000 searches for an image corresponding to the keyword not searched in a media storage. Operation S1030 corresponds to operation S230 of FIG. 2, and thus, a repeated description will be omitted for brevity.

In operation S1032, the electronic device 2000 selects an image corresponding to the keyword from among the searched and retrieved one or more images. The selected image may be used as a reference image. There may be one or more selected images corresponding to one keyword. Operation S1032 corresponds to operation S230 of FIG. 2, and thus, a repeated description will be omitted for brevity.

The electronic device 2000 may perform image segmentation on the selected image. For example, at operation S1033, the electronic device 2000 may determine whether to apply image segmentation based on a user input. When image segmentation is applied, operation S1034 may be performed. When image segmentation is not performed, operation S1036 may be performed.

In operation S1034, the electronic device 2000 may apply image segmentation and may select a segment to be used for image personalization from among a plurality of segments. The selected segment may be an image of a region related to the keyword. Operation S1034 corresponds to operation S240 of FIG. 2, and thus, a repeated description will be omitted for brevity.

In operation S1036, the electronic device 2000 may add the keyword and the selected image to reference data. The selected image may be used as a reference image. The reference data may be a text-image pair including the keyword and the reference image, or a text-image pair including the keyword and the segment of the reference image.

When one or more reference images respectively corresponding to each keyword of the plurality of keywords are determined, the electronic device 2000 may perform operation S1040.

In operation S1040, the electronic device 2000 may generate a prompt embedding and a reference embedding. Operation S1040 corresponds to operation S250 of FIG. 2, and thus, a repeated description will be omitted for brevity.

The electronic device 2000 may transmit the prompt embedding (or the prompt) and the reference embedding to the server 3000.

In operation S1045, the server 3000 may generate an image. The server 3000 may generate one or more images using a generative model. The generative model may use the reference embedding as input data. Because the generated image includes a feature of the reference image stored in the media storage of a user, the generated image may be referred to as a personalized image. The server 3000 may transmit the personalized image to the electronic device 2000.

In operation S1050, the electronic device 2000 may display the one or more images received from the server 3000.

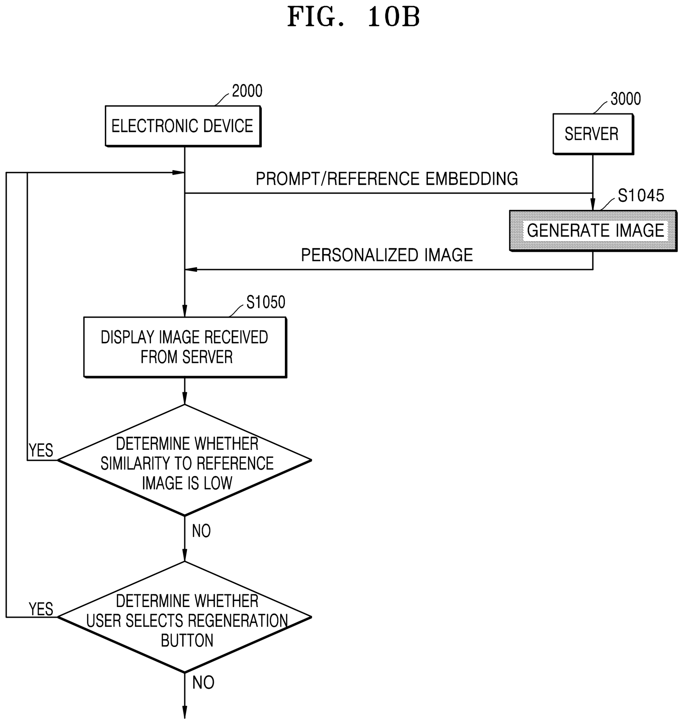

FIG. 10B is a flowchart illustrating additional operations of an electronic device and a server, according to an embodiment of the disclosure.

The electronic device 2000 may perform an operation of regenerating a personalized image based on a predefined condition.

In an embodiment of the disclosure, the electronic device 2000 may regenerate a personalized image (e.g., generate a new personalized image) based on a similarity between the personalized image received from the server 3000 and the reference image. The electronic device 2000 may compare a similarity between the personalized image and the reference image. The electronic device 2000 may use any of various algorithms to determine a similarity between images. For example, the electronic device 2000 may calculate a similarity between the personalized image and the reference image through pixel unit comparison or histogram comparison. Alternatively, the electronic device 2000 may extract features of the images using a neural network (e.g., a CNN) for processing image and may calculate a similarity between the personalized image and the reference image. When a similarity between the images is lower than a preset threshold value, the electronic device 2000 may transmit the prompt embedding (or the prompt) and the reference embedding to the server 3000 to perform operation S1045 again. The electronic device 2000 may receive a regenerated image from the server 3000 and may display the regenerated image on a screen.

In an embodiment of the disclosure, the electronic device 2000 may regenerate a personalized image based on a user input. At operation S1052, The electronic device 2000 may receive a user input that requesting image regeneration. When the user input that requests image regeneration is received, the electronic device 2000 may transmit the prompt embedding (or the prompt) and the reference embedding to the server 3000 to perform operation S1045 again. The electronic device 2000 may receive a regenerated image from the server 3000 and may display the regenerated image on the screen.

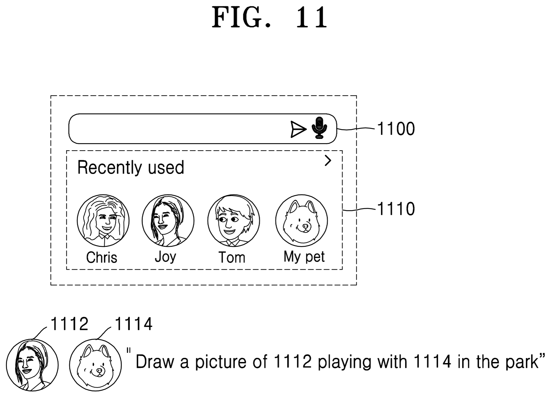

FIG. 11 is a diagram for describing an operation in which an electronic device provides image feature information to a user, according to an embodiment of the disclosure.

In an embodiment of the disclosure, the electronic device 2000 may obtain image feature information. For example, the electronic device 2000 may generate a reference embedding by converting reference data including a text-image pair into a vector representation for image generation. In this case, the reference embedding is transmitted to the server 3000, and the server 3000 generates an image by using the reference embedding.

In an embodiment of the disclosure, the electronic device 2000 may store image feature information. The electronic device 2000 may store the image feature information, and when there is another request to generate a personalized image after the image feature information is stored, may visualize and display the image feature information. For example, the electronic device 2000 may store the generated reference embedding. When there is another request to generate a personalized image after the reference embedding is stored, the electronic device 2000 may visualize and display the stored reference embedding. In FIG. 11, a graphical interface through which the electronic device 2000 may receive a prompt from a user as an input is illustrated. Various elements may be included in the graphic interface. For example, a prompt input field 1100 and recently used reference data 1110 may be included, but some of the above elements may be omitted from or other elements may be added to the graphical interface through which the prompt may be received.

In an embodiment of the disclosure, the electronic device 2000 may convert the reference embedding into the reference data 1110 using a decoder that performs a reverse operation of an encoder. For example, the reference data may be a text-image pair including a keyword and a reference image, which may be expressed as {keyword, reference image}. For example, referring to the reference data 1110 of FIG. 11, first reference data={keyword:Chris, reference image:image including Chris}. Similarly, second reference data 1112={Joy, image including Joy}, third reference data ={Tom, image including Tom }, and fourth reference data 1114={My pet, image including My pet}.

The electronic device 2000 may receive a user input selecting the reference data. When the user of the electronic device 2000 inputs the prompt, the user may use the reference data 1110. For example, the user may use the reference data 1110, instead of inputting a sentence "Draw a picture of Joy playing with my pet in the park" as a text or voice input. For example, the electronic device 2000 may receive a user input that selects the second reference data 1112 and the fourth reference data 114 from the reference data 1110.

The electronic device 2000 may transmit the reference embedding corresponding to the reference data 1110 to the server 3000, based on the user input selecting the reference data 1110. The server 3000 may generate a personalized image using a generative model based on the reference embedding and may transmit the personalized image to the electronic device 2000.

The electronic device 2000 may omit one or more of operations for generating the reference embedding by storing the reference embedding and reusing the stored reference. For example, all or some of operations performed by the electronic device 2000 to generate the reference embedding, such as prompt acquisition, keyword extraction, image search, image segmentation, and vector conversion, may be omitted.

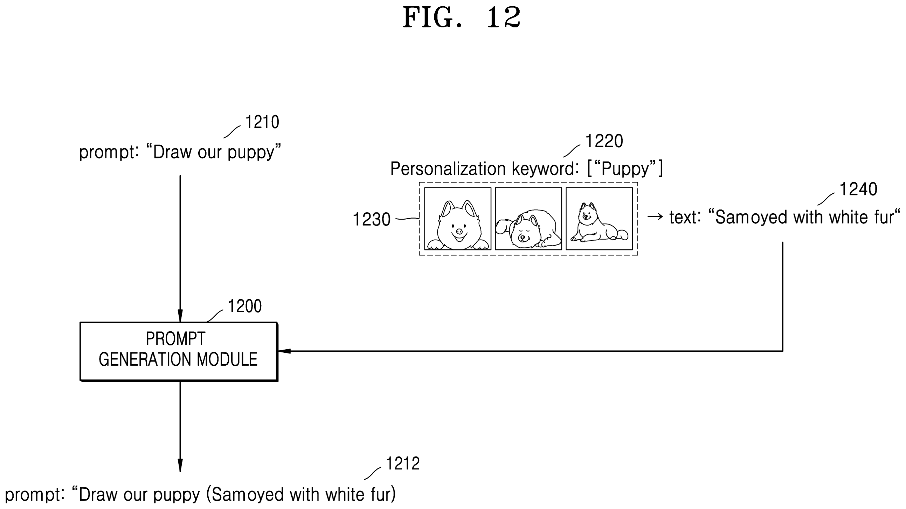

FIG. 12 is a diagram for describing an operation in which an electronic device generates or processes a prompt, according to an embodiment of the disclosure.

A prompt generation module 1200 may include a natural language processing model for performing at least one from among generating, processing, and converting prompt.

In an embodiment of the disclosure, the electronic device 2000 may process a prompt 1210 that is obtained, using the prompt generation module 1200. The electronic device 2000 may obtain the prompt 1210 and may extract a keyword 1220 from the prompt 1210. For example, the electronic device 2000 may extract puppy that is the keyword 1220 from the prompt 1210 saying "Draw our puppy".

The electronic device 2000 may search for one or more images 1230 corresponding to the keyword and may select one or more reference images from among the searched and retrieved one or more images 1230. For example, the electronic device 2000 may find the one or more images 1230 corresponding to a puppy from among images stored in a media storage of the electronic device 2000. In this case, a reference image may be determined from among the one or more images 1230.

The electronic device 2000 may extract a text description 1240 of the reference image from the reference image. The electronic device 2000 may obtain the text description 1240 of the image using any of various methods (e.g., image captioning) for extracting text from an image. For example, the electronic device 2000 may extract the text description 1240 saying "Samoyed with white fur" from the reference image. Alternatively, the electronic device 2000 may extract the text description 1240 from the searched and retrieved one or more images 1230.

The electronic device 2000 may change the prompt 1210 based on the text description 1240 of the reference image. Content of the text description 1240 may be included in a new prompt 1212.

In an embodiment of the disclosure, the electronic device 2000 may generate the new prompt 1212 using the prompt generation module 1200. For example, the electronic device 2000 may extract the text description 1240 from the searched and retrieved one or more images 1230 and/or the reference image and may generate the new prompt 1212 based on the text description. The new prompt 1212 may include content of the text description 1240 and may include text with different content from the original prompt 1210.

In an embodiment of the disclosure, the electronic device 2000 may process the text description 1240 as input data for generating a personalized image. For example, the electronic device 2000 may include the text description in the reference data. In this case, the reference data={keyword, reference image, text description 1240}.

The electronic device 2000 may obtain image feature information using the reference data including the keyword, the reference image, and the text description 1240. For example, the electronic device 2000 may generate a reference embedding by converting the reference data into a vector representation. The generated reference embedding may be transmitted to the server 3000.

In an embodiment of the disclosure, when the server 3000 performs an inference operation by using a generative model, the server 3000 may receive a CFG scale sₜ for the text description 1240 as an input parameter. That is, the server 3000 may receive a CFG scale sₚ for the prompt, a CFG scale sᵣ for the reference, and a CFG scale sₜ for the text description 1240 as input parameters. In this case, as an sₚ value increases, a personalized image similar to the prompt may be generated; as an sᵣ value increases, a personalized image similar to the reference (e.g., the keyword and the reference image) may be generated; and as an sₜ value increases, a personalized image similar to the text description may be generated.

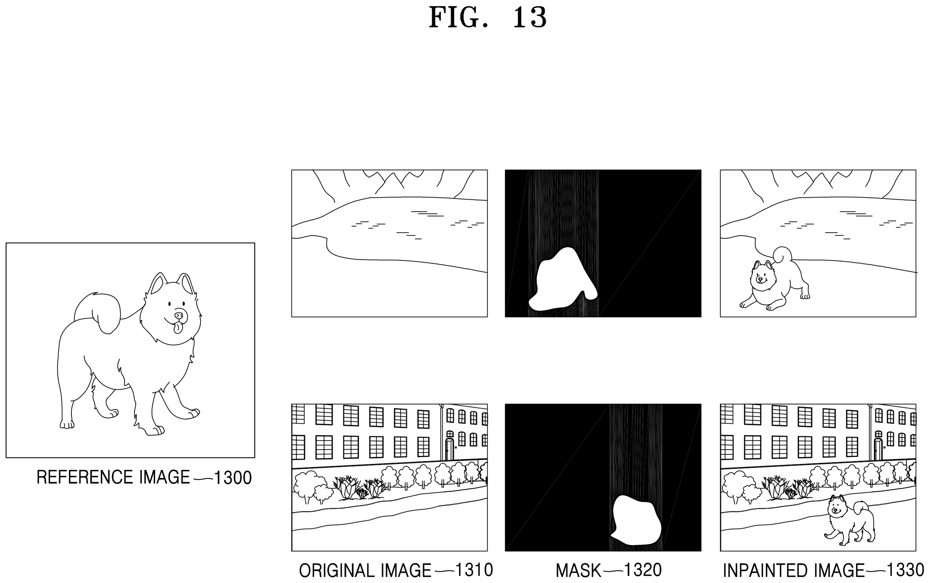

FIG. 13 is a diagram for describing an operation in which an electronic device provides a personalized image, according to an embodiment of the disclosure.

In an embodiment of the disclosure, the electronic device 2000 may provide an inpainted image 1330 as a personalized image to a user using inpainting. The impainted image 1330 may be generated based on a reference image 1300, an original image 1310, and a mask 1320.

In an embodiment of the disclosure, the electronic device 2000 may obtain the original image 1310 and the mask 1320. For example, the electronic device 2000 may receive a user input selecting the original image 1310 from the user. The original image 1310 may be stored in a local media storage of the electronic device 2000 or may be obtained by the user from an external source (e.g., search results). Also, the electronic device 2000 may receive an input designating the mask 1320 corresponding to the original image 1310 from the user.

The electronic device 2000 may determine the reference image 1300. Also, the electronic device 2000 may generate a reference embedding using the reference image 1300. For example, the electronic device 2000 may perform all or some of prompt acquisition, keyword extraction, image search, image segmentation, and vector conversion. Operations of generating a reference embedding have been described in detail with reference to the previous drawings, and thus, a repeated description will be omitted.

The electronic device 2000 may transmit the reference image 1300 (or the reference embedding), the original image 1310, and the mask 1320 to the server 3000. The server 3000 may generate the impainted image 1330 that is a personalized image by applying data (e.g., a prompt or a prompt embedding, the reference image 1300 or the reference embedding, the original image 1310, and the mask 1320) received from the electronic device 2000 as input data to a generative model. In this case, the generative model may generate the inpainted image 1330 using an image-to-image method. In detail, the generative model may identify a region to be inpainted within the original image 1310 based on the original image 1310 and the mask 1320 and may fill pixels so that a feature of the reference image 1300 is included in the identified region.

The server 3000 may transmit the inpainted image 1330 to the electronic device 2000.

The term "original image" may correspond to various expressions which may represent the same/similar concept. For example, the term "original image" may correspond to expressions such as "initial image", "base image" and "basic image".

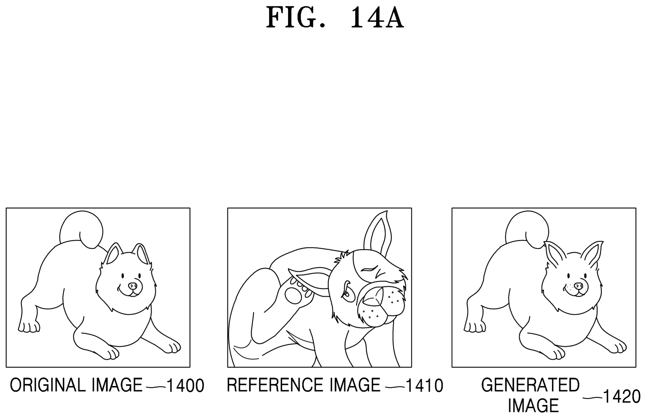

FIG. 14A is a diagram for describing an operation in which an electronic device provides a personalized image, according to an embodiment of the disclosure.

In an embodiment of the disclosure, the electronic device 2000 may provide a personalized image based on an input image. For example, the electronic device 2000 may provide, to a user, a personalized image (generated image 1420) in which a feature of a reference image 1410 is applied to an original image 1400 while a composition of the original image 1400 is maintained. The generated image 1420 may be generated based on the original image 1400 and the reference image 1410.

In an embodiment of the disclosure, the electronic device 2000 may obtain the original image 1400. For example, the electronic device 2000 may receive a user input selecting the original image 1400 from the user. The original image 1400 may be an image stored in a local media storage of the electronic device 2000 or obtained by the user from an external source (e.g., search).

The electronic device 2000 may determine the reference image 1410. Also, the electronic device 2000 may generate a reference embedding using the reference image 1410. For example, the electronic device 2000 may perform all or some of prompt acquisition, keyword extraction, image search, image segmentation, and vector conversion. Operations of generating a reference embedding have been described with reference to the previous drawings, and thus, a repeated description will be omitted.

The electronic device 2000 may transmit the original image 1400 and the reference image 1410 (or the reference embedding) to the server 3000. The server 3000 may generate the generated image 1420 that is a personalized image by applying data (a prompt or a prompt embedding, the original image 1400, and the reference image 1410 or the reference embedding) received from the electronic device 2000 as input data to a generative model. In this case, the generative model may generate the generated image 1420 using an image-to-image method. For example, the generative model may change the original image 1400 to include the feature of the reference image 1410 while maintaining the composition of the original image 1400. In detail, when the prompt is "Change the puppy's face", the generated image 1420 in which the puppy's appearance in the original image 1400 is maintained and the puppy's face is changed into that in the reference image 1410 may be generated.

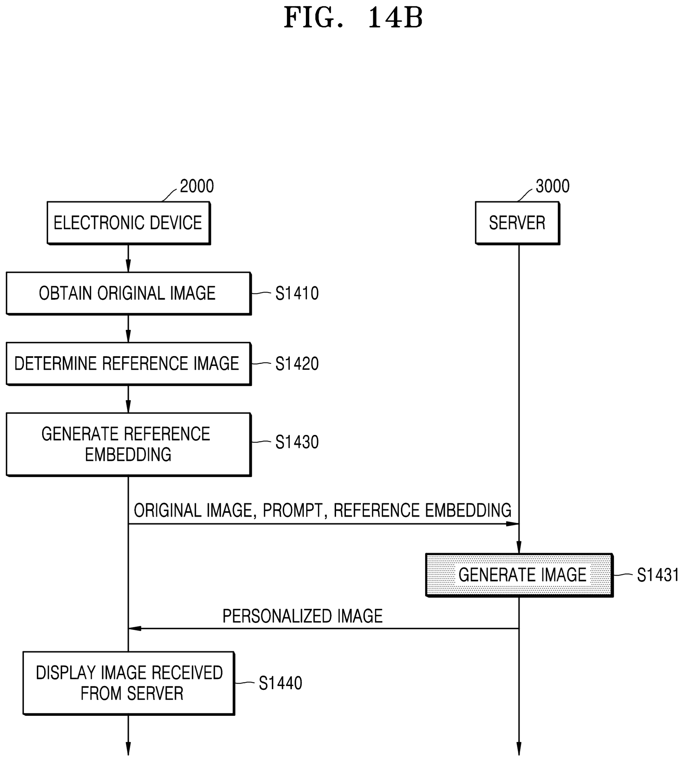

FIG. 14B is a diagram for describing an operation in which an electronic device provides a personalized image, according to an embodiment of the disclosure.

In an embodiment of the disclosure, the electronic device 2000 may provide an image generated based on an image input. In FIG. 14B, an operation of generating a personalized image using an image-to-image method described with reference to FIG. 14A will be further described.

In an embodiment of the disclosure, the electronic device 2000 may perform data processing operations for generating a personalized image using an image-to-image method. The electronic device 2000 may provide a new image (e.g., a personalized image) generated based on an input image (original image) and a reference image. In this case, the personalized image may be an image obtained by reflecting a feature of the reference image in the original image.

In operation S1410, the electronic device 2000 may obtain an original image. The original image of operation S1410 may correspond to the original image 1400 described with reference to FIG. 14A. The original image 1400 may be stored in a local media storage of the electronic device 2000 or may be obtained by a user from an external source (e.g., search results).

In operation S1420, the electronic device 2000 may determine a reference image. For example, the electronic device 2000 may determine a reference image based on a user input selecting the reference image. The reference image of operation S1420 may correspond to the reference image 1410 described with reference to FIG. 14A.

In operation S1430, the electronic device 2000 may generate a reference embedding. The electronic device 2000 may perform all or some of prompt acquisition, keyword extraction, image search, image segmentation, and vector conversion to generate the reference embedding.

In an embodiment of the disclosure, the electronic device 2000 may generate the reference embedding by converting the reference image into a vector representation. The electronic device 2000 may convert the reference image into a vector representation, or may perform image segmentation on the reference image and may convert an obtained segment (e.g., an object) into a vector representation.

In an embodiment of the disclosure, the electronic device 2000 may generate the reference embedding by converting a text-image pair including a keyword and the reference image into a vector representation. The keyword may be obtained using any of various methods. For example, the electronic device 2000 may analyze the reference image. The electronic device 2000 may obtain text related to the reference image using image captioning, image classification, or object recognition and may extract the keyword from the text. For example, the electronic device 2000 may obtain a user input indicating the keyword corresponding to the reference image. For example, the electronic device 2000 may obtain a prompt. The electronic device 2000 may extract the keyword from the prompt. When the electronic device 2000 obtains the keyword, image segmentation may be performed on the reference image to extract a region related to the keyword.

In an embodiment of the disclosure, the electronic device 2000 may transmit the prompt, the original image, and the reference embedding to the server 3000. The prompt transmitted to the server 3000 may be converted into a prompt embedding of a vector representation in the server 3000, and the original image transmitted to the server 3000 may be converted into an image embedding of a vector representation in the server 3000.

In an embodiment of the disclosure, the electronic device 2000 may generate the prompt embedding by converting the prompt into a vector representation and may transmit the prompt embedding to the server 3000.

In an embodiment of the disclosure, the electronic device 2000 may generate the image embedding by converting the original image into a vector representation and may transmit the image embedding to the server 3000.

In operation S1431, the server 3000 may generate an image. The server 3000 may generate one or more images using a generative model. The generative model may use the prompt (or the prompt embedding), the original image (or the image embedding), and the reference embedding as input data. The original image and a feature of the reference image may be included in the generated image. The generated image may be referred to as a personalized image. The server 3000 may transmit the personalized image to the electronic device 2000.

In operation S1440, the electronic device 2000 may display the one or more images received from the server 3000.

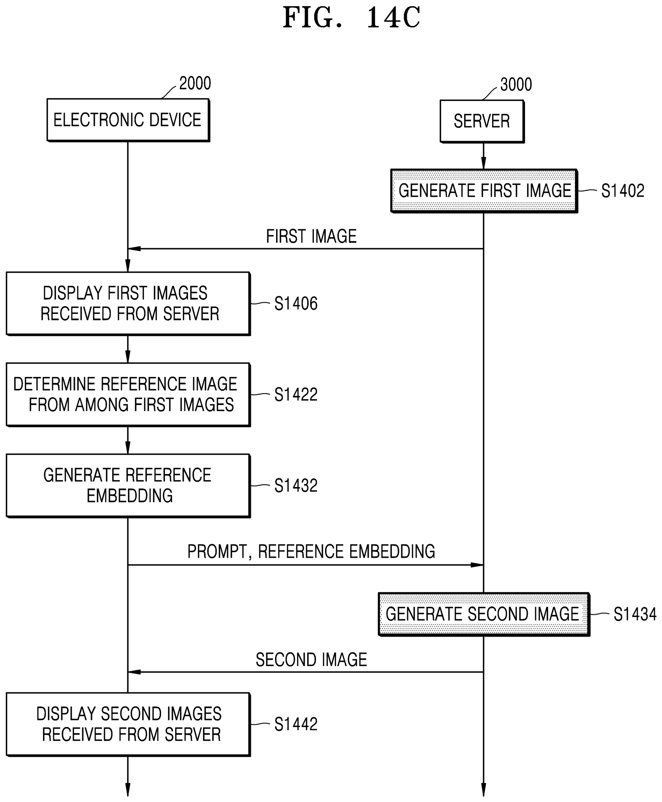

FIG. 14C is a diagram for describing an operation in which an electronic device provides a personalized image, according to an embodiment of the disclosure.

In an embodiment of the disclosure, the electronic device 2000 may perform operations for generating a personalized image based on an image generated by using a generative model.

In operation S1402, the server 3000 may generate a first image using a generative model. The first image may be an image generated using only a prompt (first prompt). The server 3000 may obtain the first prompt. For example, the electronic device 2000 may obtain the first prompt and may transmit the first prompt to the server 3000. The server 3000 may receive the first prompt from the electronic device 2000. In another example, the server 3000 may receive the first prompt from another electronic device (e.g., a desktop personal computer that is another client device) communicating with the server 3000.

The server 3000 may apply the first prompt as input data to the generative model and may obtain the first image as output data. Certain data processing may be applied to the first prompt. For example, the first prompt may be converted into a prompt embedding that is a vector representation.

The electronic device 2000 may receive the first image generated based on the first prompt from the server 3000. There may be one or more first images.

In operation S1406, the electronic device 2000 may display the one or more first images received from the server 3000.

In operation S1422, the electronic device 2000 may determine a reference image from among the one or more first images. For example, the electronic device 2000 may determine the first image selected based on an input that selects one of the one or more first images as a reference image.

In operation S1432, the electronic device 2000 may generate a reference embedding.

In an embodiment of the disclosure, the electronic device 2000 may obtain a second prompt. The second prompt may be another prompt different from the first prompt. For example, the second prompt may be a prompt input to generate a second image.

In an embodiment of the disclosure, the electronic device 2000 may generate the reference embedding by converting a text-image pair including a keyword and the reference image into a vector representation. The keyword may be extracted from the second prompt or may be input by a user.

The electronic device 2000 may transmit the second prompt and the reference embedding to the server 3000. The second prompt transmitted to the server 3000 may be converted into a vector representation in the server 3000. In an embodiment of the disclosure, the electronic device 2000 may generate a second prompt embedding by converting the second prompt into a vector representation and may transmit the second prompt embedding to the server 3000.

In operation S1434, the server 3000 may generate a second image. The server 3000 may generate one or more second images using the generative model. The generative model may use the second prompt (or the second prompt embedding) and the reference embedding as input data. A feature of the reference image that is an input image may be included in the second image. The reference image is determined from among the one or more first images generated by the generative model, and thus, the second image may include a feature of the first image. The second image may be referred to as a personalized image. The server 3000 may transmit the personalized image to the electronic device 2000.

In operation S1442, the electronic device 2000 may display the one or more second images received from the server 3000.

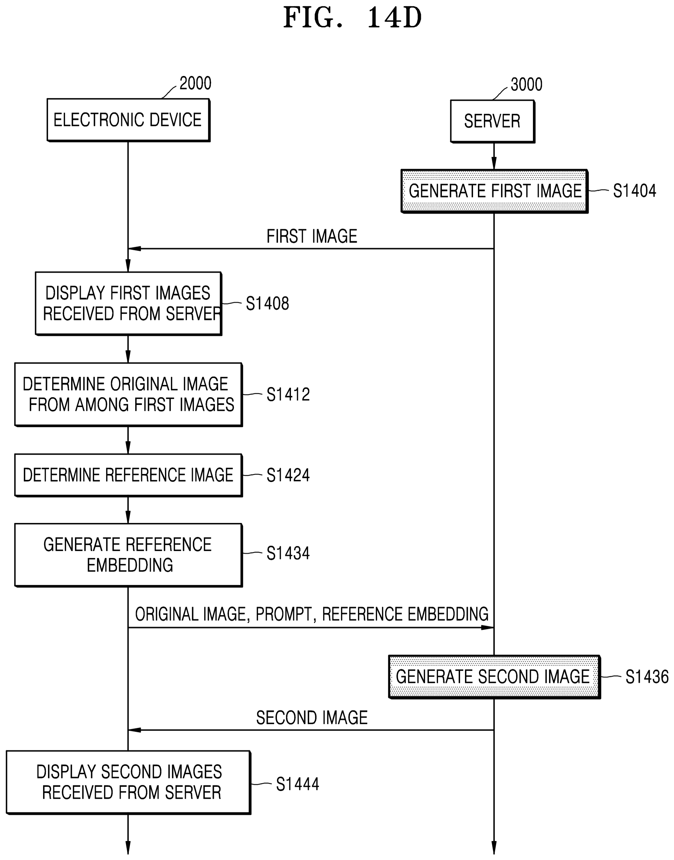

FIG. 14D is a diagram for describing an operation in which an electronic device provides a personalized image, according to an embodiment of the disclosure.

In an embodiment of the disclosure, the electronic device 2000 may perform operations for generating a personalized image using an image-to-image method, based on an image generated by using a generative model.

In operation S1404, the server 3000 may generate a first image by using a generative model. The first image may be generated by the generative model based on a first prompt.

In operation S1408, the electronic device 2000 may display one or more first images received from the server 3000.

In operation S1412, the electronic device 2000 may determine an original image from among the one or more first images. The original image of operation S1412 may correspond to the original image 1400 described with reference to FIG. 14A.

In operation S1424, the electronic device 2000 may determine a reference image. For example, the electronic device 2000 may determine a reference image based on a user input selecting the reference image. The reference image of operation S1424 may correspond to the reference image 1410 described with reference to FIG. 14A.

In operation S1434, the electronic device 2000 may generate a reference embedding. To generate the reference embedding, the electronic device 2000 may perform all or some of second prompt acquisition, keyword extraction, image search, image segmentation, and vector conversion. A second prompt may be a prompt input to generate a second image. Operation S1434 may correspond to operation S1430 of FIG. 14B. Accordingly, a repeated description will be omitted for brevity.

In operation S1436, the server 3000 may generate a second image. The server 3000 may generate one or more second images using the generative model. The generative model may use the prompt (or prompt embedding), the original image (or image embedding), and the reference embedding as input data. The second image may include the original image and a feature of the reference image. Because the original image is determined from among the one or more first images generated by the generative model, the second image may include the first image and the feature of the reference image. The second image may be referred to as a personalized image. The server 3000 may transmit the personalized image to the electronic device 2000.

In operation S1444, the electronic device 2000 may display the one or more second images received from the server 3000.

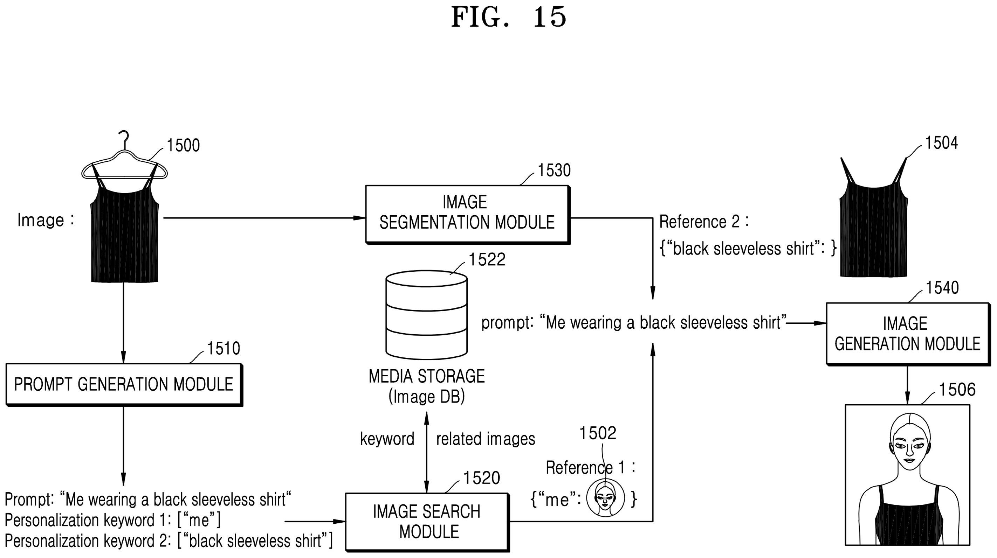

FIG. 15 is a diagram for describing an operation in which an electronic device provides a personalized image, according to an embodiment of the disclosure.

In an embodiment of the disclosure, the electronic device 2000 may generate images showing various appearances of a user according to the user's request. For example, the electronic device 2000 may generate an image in which the user wears a product. In FIG. 15, the following will be described assuming that an image in which the user wears virtual clothes is generated.

The electronic device 2000 may obtain an image 1500. For example, the electronic device 2000 may receive a user input selecting the image 1500. The image 1500 may be stored in a local media storage 1522 of the electronic device 2000 or may be obtained by the user from an external source (e.g., search results).

The electronic device 2000 may generate a prompt corresponding to the image 1500 by using a prompt generation module 1510. For example, the electronic device 2000 may extract a text description of the image 1500 from the image 1500 and may generate a prompt based on the extracted text. The prompt generated by the prompt generation module 1510 may be determined or changed based on a user input. Alternatively, the prompt may be directly received from the user. In detail, for example, when the image 1500 is an image including a product "black sleeveless shirt", the prompt may be "me wearing a black sleeveless shirt".

The electronic device 2000 may determine one or more personalization keywords from the prompt. For example, the electronic device 2000 may extract a first personalization keyword "me" and a second personalization keyword "black sleeveless shirt" from the prompt saying "me wearing a black sleeveless shirt".

The electronic device 2000 may search for an image corresponding to the personalization keyword from among one or more images stored in a media storage 1522 of the electronic device 2000 by using an image search module 1520. A reference image may be determined from among the searched and retrieved one or more images. For example, an image including the user, which is an image corresponding to the keyword "me", may be determined as a first reference image 1502.

In an embodiment of the disclosure, the electronic device 2000 may segment a region in the image 1500 by using an image segmentation module 1530. Various methods may be applied as image segmentation, and this operation has been described above, and thus, a repeated description will be omitted. As an image segmentation result, a segment corresponding to the keyword may be determined as a reference image. For example, a segment including a black sleeveless shirt, which is an image corresponding to the keyword "black sleeveless shirt", may be determined as a second reference image 1504.

The electronic device 2000 may convert reference data={keyword, reference image} including the personalization keyword and the reference image into a vector representation. For example, the electronic device 2000 may generate a first reference embedding by converting first reference data={me, image including the user}, and may generate a second reference embedding by converting second reference data={black sleeveless shirt, image including a black sleeveless shirt }.

The electronic device 2000 may transmit the prompt (or prompt embedding) and the reference embedding to the server 3000. For example, the electronic device 2000 may transmit the prompt saying "me wearing a black sleeveless shirt", the first reference embedding, and the second reference embedding to the server 3000.

The server 3000 may generate a personalized image 1506 using an image generation module 1540. For example, the personalized image 1506 may include an image of the user wearing a black sleeveless shirt. The server 3000 may transmit the personalized image to the electronic device 2000.

The electronic device 2000 may display the personalized image received from the server 3000 on a screen.

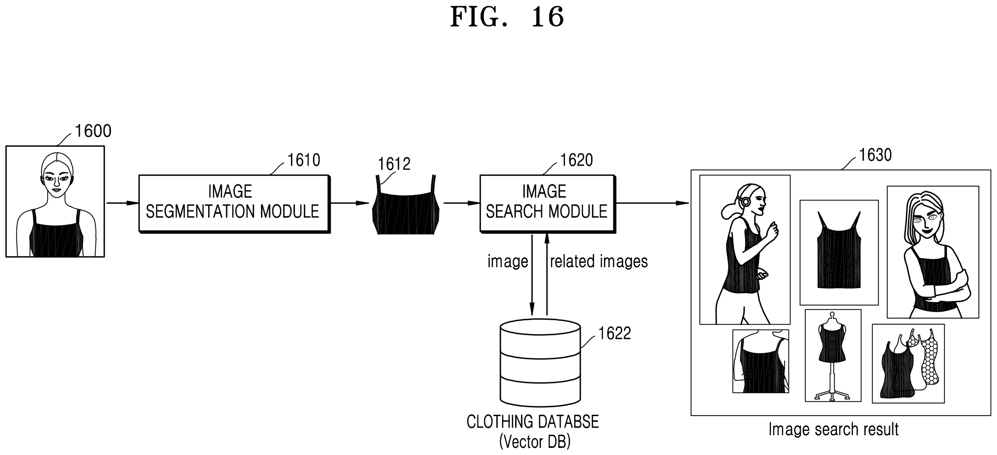

FIG. 16 is a diagram for describing an operation in which an electronic device provides information related to a personalized image, according to an embodiment of the disclosure.

In FIG. 16, the following will be described assuming that a personalized image 1600 has already been generated. The following will be described assuming that the personalized image 1600 is an image in which a user wears a product as described with reference to FIG. 15.

In an embodiment of the disclosure, the electronic device 2000 may provide information related to the personalized image 1600. For example, the electronic device 2000 may provide, to the user, information related to an object and a product included in the personalized image 1600.

The electronic device 2000 may detect one or more objects (e.g., products) included in the personalized image 1600.

The electronic device 2000 may extract a segment 1612 corresponding to an object in the personalized image 1600 using an image segmentation module 1610. For example, the electronic device 2000 may detect a product "black sleeveless shirt" in the personalized image 1600. In addition, the electronic device 2000 may detect an object in the personalized image 1600 using any of various detection algorithms.

The electronic device 2000 may search for an object using an image search module 1620. For example, the electronic device 2000 may search for the detected product "black sleeveless shirt" in a clothes DB 1622. In embodiments, the clothing database 1622 may be, or may include, a vector database.

The electronic device 2000 may provide an image search result 1630 obtained by searching for the object included in the personalized image 1600 to the user as information related to the personalized image 1600. For example, the electronic device 2000 may provide, to the user, a result of searching for the product "black sleeveless".

In an embodiment of the disclosure, the electronic device 2000 may provide additional information (e.g., product name, brand, price, and purchase link) of the object included in the image search result 1630 as information related to the personalized image 1600.

In an embodiment of the disclosure, the electronic device 2000 may generate another personalized image based on the information related to the personalized image 1600. For example, the electronic device 2000 may receive a user input selecting an image including the detected object and may generate another personalized image using the selected image as a reference image. In detail, the electronic device 2000 may receive a user input selecting an image of other clothes from the image search result 1630 and may generate and provide an image in which the user wears the other closes. This operation has been described with reference to FIG. 15, and thus, a repeated description will be omitted.

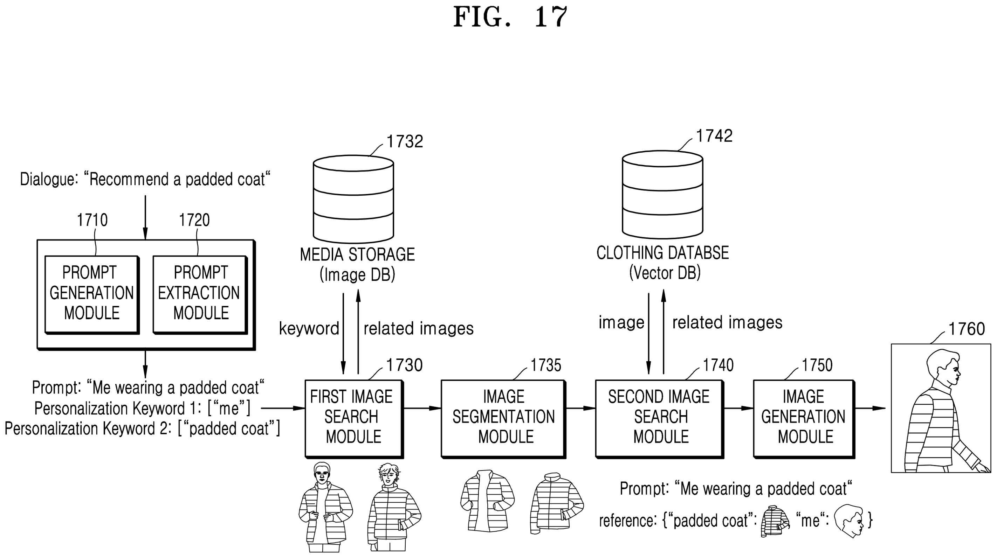

FIG. 17 is a diagram for describing an operation in which an electronic device provides a personalized image, according to an embodiment of the disclosure.

In an embodiment of the disclosure, the electronic device 2000 may provide a recommendation to a user in response to the user's request. The recommendation provided to the user may be provided through a personalized image 1760 including recommended content.

The electronic device 2000 may obtain a user input. The user input may include, but is not limited to, a text input and a voice input. For example, the electronic device 2000 may receive a user input indicating a request to "recommend a padded coat" from the user.

The electronic device 2000 may generate a prompt corresponding to the user input using a prompt generation module 1710. The prompt generation module 1710 may include a natural language processing model for generating/processing/converting the prompt. For example, the electronic device 2000 may generate a prompt saying "me wearing a padded coat".

The electronic device 2000 may extract one or more keywords from the prompt using a keyword extraction module 1720. For example, the electronic device 2000 may extract a first keyword "me" and a second keyword "padded coat" from the prompt saying "me wearing a padded coat".

The electronic device 2000 may search for images corresponding to the keyword from among images stored in a media storage 1732 of the electronic device 2000 by using a first image search module 1730. For example, the electronic device 2000 may select a first image including the user corresponding to the first keyword "me" from among the images stored in the media storage 1732. The electronic device 2000 may select a second image including the second keyword "padded coat" from among the images stored in the media storage 1732.

The electronic device 2000 may extract a segment from the image using an image segmentation module 1735. For example, the electronic device 2000 may segment a region corresponding to the user from the first image and may segment a region corresponding to the padded coat from the second image.

The electronic device 2000 may search images similar to the segment of the image using a second image search module 1740. For example, the electronic device 2000 may search for images similar to the padded coat from among data stored in a clothing database 1742. In embodiments, the clothing database 1622 may be, or may include, a vector database. The first image search module 1730 and the second image search module 1740 may be implemented as one image search module.

The electronic device 2000 may determine a reference image. For example, the electronic device 2000 may determine the first image corresponding to the first keyword "me" as a first reference image. Also, for example, the electronic device 2000 may determine an image searched by using the second image search module 1740 as a second reference image for recommendation. As a result, first reference data={me, first reference image} and second reference data ={padded coat, second reference image} which are text-image pairs are determined.

The electronic device 2000 may generate a reference embedding by converting the first reference data and the second reference data into a vector representation. The electronic device 2000 may transmit the reference embedding to the server. The server 3000 may generate a personalized image 1760 by using a generative model. In this case, the generative model may use the reference embedding as input data. The personalized image 1760 may include a feature of the reference image. In detail, the personalized image 1760 may be an image in which the user wears a padded coat searched in the clothing database 1742.

The electronic device 2000 may provide information related to the personalized image to the user based on the generated personalized image 1760. This operation has been described with reference to FIG. 16, and thus, a repeated description will be omitted.

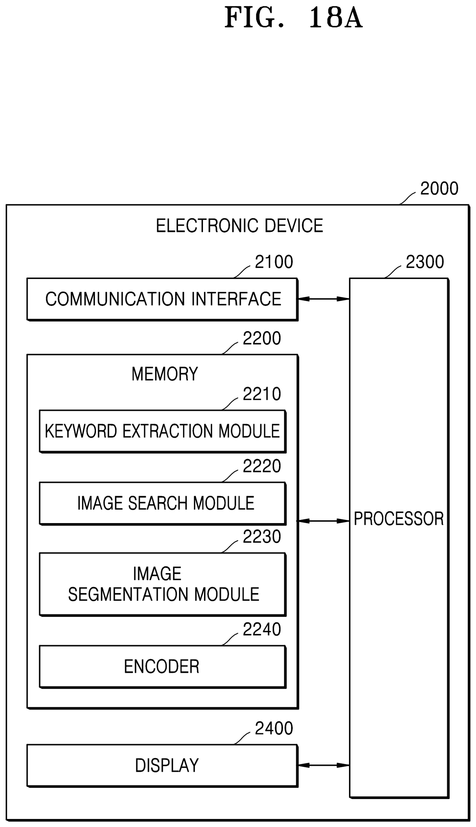

FIG. 18A is a block diagram illustrating a configuration of an electronic device, according to an embodiment of the disclosure.

In an embodiment of the disclosure, the electronic device 2000 may include a communication interface 2100, a memory 2200, a processor 2300, and a display 2400.

The communication interface 2100 may perform data communication with other electronic devices under the control of the processor 2300.

The communication interface 2100 may include a communication circuit capable of performing data communication between the electronic device 2000 and another electronic device (e.g., the server 3000) by using at least one of data communication methods including, for example, wired LAN, wireless LAN, Wi-Fi, Bluetooth, ZigBee, Wi-Fi direct (WFD), infrared communication (e.g., infrared data association (IrDA)), Bluetooth low energy (BLE), near-field communication (NFC), wireless broadband Internet (Wibro), world interoperability for microwave access (WiMAX), shared wireless access protocol (SWAP), wireless gigabit alliance (WiGig), and radio-frequency (RF)communication.

The communication interface 2100 may transmit and receive data for providing a personalized image to and from the server 3000. For example, the communication interface 2100 may transmit a reference embedding to the server 3000 and may receive a personalized image from the server 3000.

The memory 2200 may store instructions, data structures, and program codes readable by the processor 2300. Operations performed by the processor 2300 may be implemented by executing instructions or codes of a program stored in the memory 2200.

The memory 2200 may include a non-volatile memory including at least one of a flash memory type, a hard disk type, a multimedia card micro type, a card type memory (e.g., Secure Digial (SD) or eXtreme digital (XD) memory), a read-only memory (ROM), an electrically erasable programmable read-only memory (EEPROM), a programmable read-only memory (PROM), a magnetic memory, a magnetic disk, or an optical disk, and a volatile memory such as a random-access memory (RAM) or a static random-access memory (SRAM).

The memory 2200 may store one or more instructions and/or programs that allow the electronic device 2000 to operate to provide a personalized image. For example, instructions and/or programs for performing functions of a keyword extraction module 2210, an image search module 2220, an image segmentation module 2230, and an encoder 2240 may be stored in the memory 2200. Instructions and/or programs for performing functions of a prompt generation module (not shown) may be further stored in the memory 2200.

The processor 2300 may control overall operations of the electronic device 2000. For example, the processor 2300 may control overall operations for the electronic device 2000 to provide a personalized image by execute one or more instructions of a program stored in the memory 2200. There may be one or more processors 2300.

The processor 2300 may include at least one of, for example, but not limited to, a central processing unit, a microprocessor, a graphics processing unit, an application-specific integrated circuit (ASIC), a digital signal processor (DSP), a digital signal processing device (DSPD), a programmable logic device (PLD), a field-programmable gate array (FPGA), an application processor (AP), a neural processing unit, or a dedicated artificial intelligence (AI) processor designed with a hardware structure specialized for processing an Al model.

The processor 2300 may extract one or more keywords from a prompt by executing the keyword extraction module 2210. Operations of the keyword extraction module 2210 have been described with reference to the previous drawings, and thus, a repeated description will be omitted.

The processor 2300 searches for one or more images corresponding to the keyword by executing the image search module 2220. A reference image may be selected from among the searched and retrieved one or more images. A keyword-reference image pair may be stored as reference data. Operations of the image search module 2220 have been described with the previous drawings, and thus, a repeated description will be omitted.

The processor 2300 may segment a region corresponding to the keyword in the reference image by executing an image segmentation module 2230. In this case, a keyword-reference image segment pair may be stored as reference data. Operations of the image segmentation module 2230 have been described with reference to the previous drawings, and thus, a repeated description will be omitted.

The processor 2240 may generate a reference embedding by converting the reference data into a vector representation using the encoder 2240. Operations of the encoder 2240 have been described with reference to the previous drawings, and thus, a repeated description will be omitted.

The modules stored in the memory 2200 are for convenience of explanation, and the disclosure is not limited thereto. Other modules (e.g., a prompt generation module) may be added to implement the above embodiments, or some modules (e.g., the image segmentation module) may be omitted. Also, one module may be divided into a plurality of modules according to detailed functions, and some of the modules may be integrated into one module.

The display 2400 may output an image signal to a screen of the electronic device 2000 under the control of the processor 2300. For example, the display 2400 may output an image signal processed in a process in which the electronic device 2000 provides a personalized image, as a prompt input result, an image search result, or a personalized image generation result, to the screen. The display 2400 may include a touch panel. The touch panel may include one or more touch sensors for detecting a touch input. In an embodiment of the disclosure, the prompt may be a text input through the touch panel.

Although not shown in FIG. 18A, the electronic device 2000 may further include additional elements to perform operations described in the above embodiments. For example, the electronic device 2000 may further include a camera, a microphone, etc. The electronic device 2000 may store an image obtained using the camera in the memory 2200. The electronic device 2000 may receive a voice input indicating the prompt using the microphone.

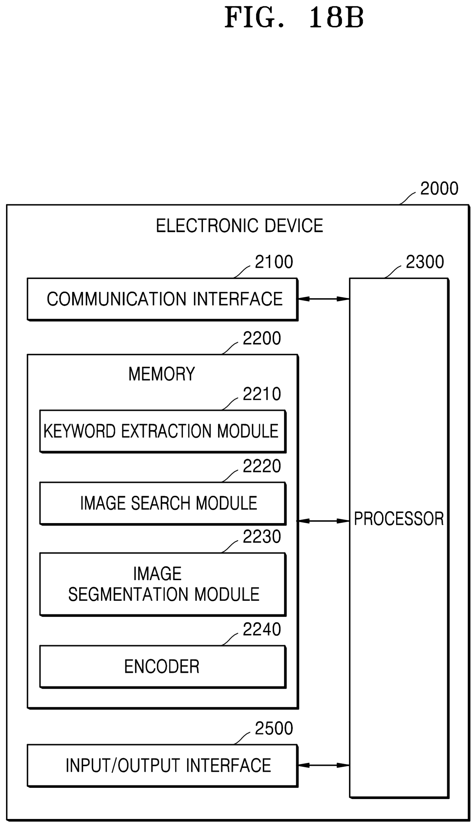

FIG. 18B is a block diagram illustrating a configuration of an electronic device, according to an embodiment of the disclosure.

In an embodiment of the disclosure, the electronic device 2000 may include the communication interface 2100, the memory 2200, the processor 2300, and an input/output interface 2500. The communication interface 2100, the memory 2200, and the processor 2300 of FIG. 18B may respectively correspond to the communication interface 2100, the memory 2200, and the processor 2300 of FIG. 18A. Accordingly, a repeated description will be omitted for brevity.

The input/output interface 2500 may process an input to the electronic device 2000 and an output from the electronic device 2000. The input/output interface 2500 may provide a connection between the electronic device 2000 and an external device. Examples of the input/output interface 2500 may include, but are not limited to, a universal serial bus (USB) port, a high-definition multimedia interface (HDMI) port, a display (DP) port, a video graphics array (VGA) port, an RGB port, a digital visual interface (DVI), and an audio jack. The electronic device 2000 may be connected to external devices such as a display, a camera, a microphone, a speaker, a keyboard, a mouse, and a touch pad through the input/output interface 2500.

The electronic device 2000 may output an image signal by using the display connected to the electronic device 2000 through the input/output interface 2500. For example, a prompt input result, an image search result, or a personalized image generation result may be displayed on a screen of the display connected to the electronic device 2000.

The electronic device 2000 may obtain input data using an input device connected to the electronic device 2000 through the input/output interface 2500. For example, the electronic device 2000 may receive a text input indicating a prompt using the keyboard, the mouse, and the touch pad connected to the electronic device 2000. For example, the electronic device 2000 may receive a voice input indicating a prompt using the microphone connected to the electronic device 2000.

When a method according to an embodiment of the disclosure includes a plurality of operations, the plurality of operations may be performed by one processor or may be performed by a plurality of processors. For example, when a first operation, a second operation, and a third operation are performed by a method according to an embodiment of the disclosure, all of the first operation, the second operation, and the third operation may be performed by a first processor, or the first operation and the second operation may be performed by a first processor (e.g., a general-purpose processor) and the third operation may be performed by a second processor (e.g., an artificial intelligence processor). The artificial intelligence processor that is an example of the second processor may perform operations for training/inference of an artificial intelligence model. However, an embodiment of the disclosure is not limited thereto.

One or more processors according to the disclosure may be implemented as a single-core processor or a multi-core processor.

When a method according to an embodiment of the disclosure includes a plurality of operations, the plurality of operations may be performed by one core or may be performed by a plurality of cores included in one or more processors.

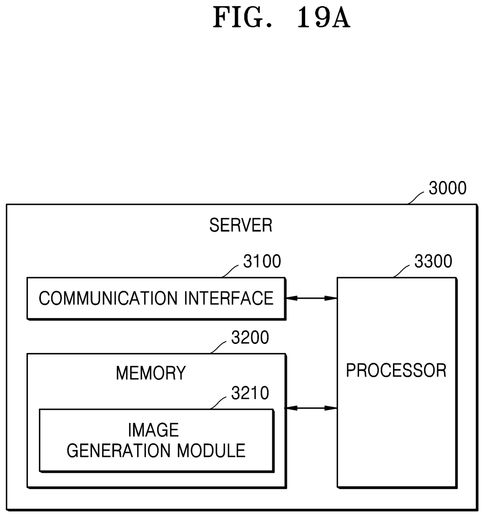

FIG. 19A is a block diagram illustrating a configuration of a server, according to an embodiment of the disclosure.

In an embodiment of the disclosure, the server 3000 may include a communication interface 3100, a memory 3200, and a processor 3300. The server 3000 may be a computing device having higher performance than the electronic device 2000 and capable of performing complex calculations and tasks using large-scale data such as training, inference, management, and deployment of a generative model.

The communication interface 3100 may perform data communication with other electronic devices under the control of the processor 3300.

The communication interface 3100 may include a communication circuit capable of performing data communication between the server 3000 and another electronic device (e.g., the electronic device 2000) using at least one of data communication methods including, for example, wired local area network (LAN), wireless LAN, Wi-Fi, Bluetooth, ZigBee, WFD, IrDA, BLE, NFC, Wibro, WiMAX, SWAP, WiGig, and RF communication.

The communication interface 3100 may transmit and receive data for providing a personalized image to and from the electronic device 2000 under the control of the processor 3300. For example, the server 3000 may receive a prompt (or a prompt embedding) and a reference embedding from the electronic device 2000 through the communication interface 3100 and may transmit a personalized image to the electronic device 2000.

The memory 3200 may store instructions, data structures, and program codes readable by the processor 3300. Operations performed by the processor 3300 may be performed by executing instructions or codes of a program stored in the memory 3200.

The memory 3200 may include a non-volatile memory including at least one of a flash memory type, a hard disk type, a multimedia card micro type, a card type memory (e.g., SD or xD memory), a ROM, an EEPROM, a PROM, a magnetic memory, a magnetic disk, or an optical disk, and a volatile memory such as a RAM or an SRAM.

The memory device 3200 may store one or more instructions and/or programs that allow the server 3000 to operate to generate a personalized image. For example, the memory 3200 may store instructions and/or programs for performing functions of an image generation module 3210. The image generation module 3210 may include a generative model.

The processor 3300 may control overall operations of the server 3000. For example, the processor 3300 may control overall operations for the server 3000 to generate a personalized image by executing one or more instructions of a program stored in the memory 3200. There may be one or more processors 3300.

The processor 3300 may include at least one of, for example, but not limited to, a central processing unit, a microprocessor, a graphics processing unit, an ASIC, a DSP, a DSPD, a PLD, an FPGA, an (AP, a neural processing unit, or a dedicated Al processor designed with a hardware structure specialized for processing an AI model..

The processor 3300 may generate a personalized image by executing the image generation module 3210. The processor 3300 may generate a personalized image by using the generative model using the reference embedding as input data. Operations of the image generation module 3210 have been described with reference to the previous drawings, and thus, a repeated description will be omitted.

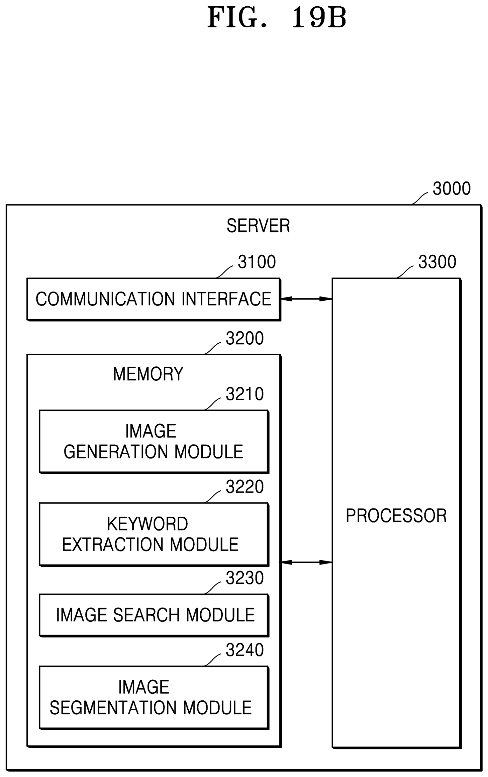

FIG. 19B is a block diagram illustrating a configuration of a server, according to an embodiment of the disclosure.

In an embodiment of the disclosure, operations performed by the electronic device 2000 and the server 3000 may be performed by the server 3000 alone. The server 3000 may obtain a prompt from a user, may obtain an image stored in the electronic device 2000 of the user as a reference image, and may generate a personalized image based on the reference image. In this case, the server 3000 may obtain an access to a media storage of the electronic device 2000 of the user.

In FIG. 19B, the same description as that made with reference to FIG. 19A will be omitted for brevity.

In an embodiment of the disclosure, instructions and/or programs for performing functions of a keyword extraction module 3220, an image search module 3230, and an image segmentation module 3240 may be stored in the memory 3200. The image generation module 3210 may include a generative model. Also, a prompt generation module (not shown) may be further stored in the memory 3200.

The keyword extraction module 3220, the image search module 3230, the image segmentation module 3240, and the prompt generation module may be executed by the processor 3300. Operations of the above modules have been described with reference to the previous drawings, and thus, a repeated description will be omitted.

The disclosure relates to a method, electronic device, and server for generating and providing a personalized image. Also, the disclosure relates to a method of generating a personalized image in which a feature of an image owned only by a user is reflected using a deployed generative model without retraining the generative model. However, technical objectives to be achieved by the disclosure are not limited thereto, and other unmentioned technical objectives will be apparent to one of ordinary skill in the art from the description of the disclosure.

According to an aspect of the disclosure, a method by which an electronic device provides a personalized image may be provided.

The method may include obtaining a prompt for image generation.

The method may include extracting a keyword from the prompt.

The method may include searching for one or more images corresponding to the keyword from among a plurality of images stored in the electronic device.

The method may include selecting a reference image from among the searched and retrieved one or more images.

The method may include segmenting a region related to the keyword within the reference image.

The method may include generating a reference embedding by converting a segment of the reference image into a vector representation.

The method may include transmitting the prompt and the reference embedding to a server.

The method may include receiving, from the server, a personalized image generated using a generative model that receives the prompt and the reference embedding as an input.

The generative model may be deployed after training is completed.

The generative model may be configured to generate the personalized image using the reference embedding only during an inference operation using the generative model.

The personalized image may include a feature of the reference image not used to train the generative model.

The extracting of the keyword may include displaying one or more keywords extracted from the prompt.

The extracting of the keyword may include determining a keyword for personalization from among the one or more keywords, based on a user input.

The selecting of the reference image may include displaying the searched and retrieved one or more images.

The selecting of the reference image may include determining one or more reference images, based on a user input.

The selecting of the reference image may include storing the keyword and the reference image corresponding to the keyword as a text-image pair.

The method may include applying a weight to the reference image, based on a user input.

The method may include storing the reference embedding.

The method may include visualizing and displaying the stored reference embedding, in response to another request to generate a personalized image after the reference embedding is stored.

The method may include extracting a text description of the reference image from the reference image.

The method may include changing the prompt based on the text description of the reference image.

The generating of the reference embedding may include converting the text description of the reference image into a vector representation.

The method may include detecting one or more products included in the personalized image.

The method may include displaying information related to the one or more products.

The method may include displaying the personalized image.

According to an aspect of the disclosure, an electronic device for providing a personalized image may be provided.

The electronic device may include: a communication interface; a memory in which one or more instructions are stored; and one or more processors configured to execute the one or more instructions stored in the memory.

The one or more processors may be configured to obtain a prompt for image generation, by executing the one or more instructions.

The one or more processors may be configured to extract a keyword from the prompt, by executing the one or more instructions.

The one or more processors may search for one or more images corresponding to the keyword from among a plurality of images stored in the electronic device, by executing the one or more instructions.

The one or more processors may be configured to select a reference image from among the searched and retrieved one or more images, by executing the one or more instructions.

The one or more processors may be configured to segment a region related to the keyword within the reference image, by executing the one or more instructions.

The one or more processors may be configured to generate a reference embedding by converting a segment of the reference image into a vector representation, by executing the one or more instructions.

The one or more processors may be configured to transmit, to a server, the prompt and the reference embedding, through the communication interface, by executing the one or more instructions.

The one or more processors may be configured to receive, from the server, a personalized image generated using a generative model that receives the prompt and the reference embedding as an input, through the communication interface, by executing the one or more instructions.

The generative model may be deployed after training is completed.

The generative model may be configured to generate the personalized image using the reference embedding only during an inference operation using the generative model.

The personalized image may include a feature of the reference image not used to train the generative model.

The one or more processors may be configured to display one or more keywords extracted from the prompt, by executing the one or more instructions.

The one or more processors may be configured to determine a keyword for personalization from among the one or more keywords, based on a user input, by executing the one or more instructions.

The one or more processors may be configured to display the searched and retrieved one or more images, by executing the one or more instructions.

The one or more processors may be configured to determine one or more reference images, based on a user input, by executing the one or more instructions.

The one or more processors may be configured to store the keyword and the reference image corresponding to the keyword as a text-image pair, by executing the one or more instructions.

The one or more processors may be configured to apply a weight to the reference image, based on a user input, by executing the one or more instructions.

The one or more processors may be configured to store the reference embedding, by executing the one or more instructions.

The one or more processors may be configured to visualize and display the stored reference embedding, in response to another request to generate a personalized image after the reference embedding is stored, by executing the one or more instructions.

The one or more processors may be configured to extract a text description of the reference image from the reference image, by executing the one or more instructions.

The one or more processors may be configured to change the prompt based on the text description of the reference image, by executing the one or more instructions.

The one or more processors may be configured to convert the text description of the reference image into a vector representation, by executing the one or more instructions.

The one or more processors may be configured to detect one or more products included in the personalized image, by executing the one or more instructions.

The one or more processors may be configured to display information related to the one or more products, by executing the one or more instructions.

The one or more processors may be configured to display the personalized image, by executing the one or more instructions.

According to an aspect of the disclosure, a method by which a server provides a personalized image may be provided.

The method may include obtaining a prompt for image generation.

The method may include extracting a keyword from the prompt.

The method may include searching for one or more reference images corresponding to the keyword from among a plurality of images stored in an electronic device.

The method may include segmenting a region related to the keyword in the reference image.

The method may include obtaining image feature information based on the region related to the keyword of the reference image.

The method may include generating a personalized image by using a generative model.

The generative model may be an artificial intelligence model configured to receive the prompt and the image feature information as an input and output the personalized image.

According to an aspect of the disclosure, a server for providing a personalized image may be provided.

The server may include: a communication interface; a memory in which one or more instructions are stored; and one or more processors configured to execute the one or more instructions.

The one or more processors may be configured to obtain a prompt for image generation, by executing the one or more instructions.

The one or more processors may be configured to extract a keyword from the prompt, by executing the one or more instructions.

The one or more processors may be configured to search for one or more reference images corresponding to the keyword from among a plurality of images stored in an electronic device, by executing the one or more instructions.

The one or more processors may be configured to segment a region related to the keyword in the reference image, by executing the one or more instructions.

The one or more processors may be configured to obtain image feature information based on the region related to the keyword of the reference image, by executing the one or more instructions.

The one or more processors may be configured to generate a personalized image by using a generative model, by executing the one or more instructions.

The generative model may be an artificial intelligence model configured to receive the prompt and the image feature information as an input and output the personalized image.

Embodiments of the disclosure may be implemented as a recording medium having computer-executable instructions such as a program module executed by a computer. A computer-readable medium may be an arbitrary available medium accessible by a computer, and examples thereof include all volatile and non-volatile media and separable and non-separable media. Further, examples of the computer-readable medium may include a computer storage medium and a communication medium. Examples of the computer storage medium include all volatile and non-volatile media and separable and non-separable media, which have been implemented by an arbitrary method or technology, for storing information such as computer-readable instructions, data structures, program modules, and other data. The communication medium typically includes computer-readable instructions, data structures, or other data of a modulated data signal such as a program module.

Also, the computer-readable storage medium may be provided as a non-transitory storage medium. Here, 'non-transitory' means that the storage medium does not include a signal (e.g., an electromagnetic wave) and is tangible, but does not distinguish whether data is stored semi-permanently or temporarily in the storage medium. For example, the 'non-transitory storage medium' may include a buffer in which data is temporarily stored.

According to an embodiment of the disclosure, methods according to various embodiments of the disclosure may be provided in a computer program product. The computer program product is a product purchasable between a seller and a purchaser. The computer program product may be distributed in the form of a machine-readable storage medium (e.g., a compact disc read-only memory (CD-ROM)), or distributed (e.g., downloaded or uploaded) online via an application store or between two user devices (e.g., smartphones) directly. When distributed online, at least part of the computer program product (e.g., a downloadable application) may be temporarily generated or at least temporarily stored in a machine-readable storage medium, such as a memory of a server of a manufacturer, a server of an application store, or a relay server.

The above description of the disclosure is provided for illustration, and it will be understood by one of ordinary skill in the art that various changes in form and details may be readily made therein without departing from essential features and the scope of the disclosure as defined by the following claims. Accordingly, the above embodiments are examples only in all aspects and are not limited. For example, each component described as a single type may be implemented in a distributed manner, and similarly, components described as distributed may be implemented in a combined form.

The scope of the disclosure is defined by the appended claims rather than the detailed description, and all changes or modifications within the scope of the appended claims and their equivalents will be construed as being included in the scope of the disclosure.

## Claims

1. A method for providing a personalized image using an electronic device, the method comprising:
obtaining a prompt for image generation;
extracting a keyword from the prompt;
searching for one or more reference images corresponding to the keyword from among a plurality of images stored in the electronic device;
segmenting a region related to the keyword within each reference image of the one or more reference images;
obtaining image feature information based on the region related to the keyword;
transmitting the prompt and the image feature information to a server; and
receiving, from the server, a personalized image generated by providing the prompt and the image feature information as an input to a generative model.

2. The method of claim 1, wherein the obtaining of the image feature information comprises:
obtaining a text-image pair comprising the keyword and the region corresponding to the keyword of the reference image; and
generating a reference embedding by converting the text-image pair into a vector representation.

3. The method of any one of claims 1 and 2, wherein the generative model is deployed after being trained, and is configured to generate the personalized image using the image feature information only during an inference operation using the generative model, and
wherein the personalized image comprises a feature of the reference image which is not used to train the generative model.

4. The method of any one of claims 1 to 3, wherein the extracting of the keyword comprises:
displaying one or more keywords extracted from the prompt; and
determining a keyword for personalization from among the one or more keywords, based on a user input.

5. The method of any one of claims 1 to 4, wherein the searching for the one or more reference images comprises:
searching for one or more images corresponding to the keyword, and retrieving the one or more images;
displaying the one or more images; and
determining the one or more reference images, based on a user input.

6. The method of any one of claims 1 to 5, further comprising:
storing the image feature information; and
visualizing and displaying the stored image feature information, in response to another request to generate a personalized image after the image feature information is stored.

7. The method of any one of claims 1 to 6, further comprising:
extracting a text description about each reference image from each reference image; and
changing the prompt based on the text description of the reference image.

8. An electronic device for generating a personalized image, the electronic device comprising:
a communication interface;
memory configured to store instructions; and
one or more processors configured to execute the instructions,
wherein the instructions, when executed by the one or more processors, cause the electronic device to:
obtain a prompt for image generation,
extract a keyword from the prompt,
search for one or more reference images corresponding to the keyword from among a plurality of images stored in the electronic device,
segment a region related to the keyword within each reference image of the one or more reference images,
obtain image feature information based on the region related to the keyword,
transmit the prompt to the image feature information to a server, through the communication interface, and
receive, from the server, a personalized image through the communication interface, wherein the personalized image is generated by providing the prompt and the image feature information as an input to a generative model.

9. The electronic device of claim 8, wherein the instructions, when executed by the one or more processors, further cause the electronic device to:
obtain a text-image pair comprising the keyword and the region corresponding to the keyword of the reference image, and
generate a reference embedding by converting the text-image pair into a vector representation.

10. The electronic device of any one of claims 8 and 9, wherein the generative model is deployed being trained, and is configured to generate the personalized image using the image feature information only during an inference operation using the generative model, and
wherein the personalized image comprises a feature of the reference image which is not used to train the generative model.

11. The electronic device of any one of claims 8 to 10, wherein the instructions, when executed by the one or more processors, further cause the electronic device to:
display one or more keywords extracted from the prompt, and
determine a keyword for personalization from among the one or more keywords, based on a user input.

12. The electronic device of any one of claims 8 to 11, wherein the instructions, when executed by the one or more processors, further cause the electronic device to:
search for one or more images corresponding to the keyword, and retrieving the one or more images,
display the one or more images, and
determine the one or more reference images, based on a user input.

13. The electronic device of any one of claims 8 to 12, wherein the instructions, when executed by the one or more processors, further cause the electronic device to:
store the image feature information, and
visualize and display the stored image feature information, in response to another request to generate a personalized image after the image feature information is stored.

14. The electronic device of any one of claims 8 to 13, wherein the instructions, when executed by the one or more processors, further cause the electronic device to:
extract a text description about each reference image from each reference image; and
change the prompt based on the text description of the reference image.

15. A computer-readable recording medium having recorded thereon a program for executing, on a computer, the method of any one of claims 1 to 7.
